(19) Europäisches Patentamt
European Patent Office
Office européen des brevets

(11) EP 3 837 327 B1

(12) **EUROPEAN PATENT SPECIFICATION**

(45) Date of publication and mention of the grant of the patent:
**12.11.2025 Bulletin 2025/46**

(21) Application number: **19850455.7**

(22) Date of filing: **16.08.2019**

(51) International Patent Classification (IPC):
***C09J 4/00*** *(2006.01)* ***C09J 4/06*** *(2006.01)*
***C08F 255/02*** *(2006.01)* ***C08G 18/48*** *(2006.01)*
***C08G 18/67*** *(2006.01)* ***C08G 18/75*** *(2006.01)*
***C09J 175/16*** *(2006.01)*

(52) Cooperative Patent Classification (CPC):
(C-Sets available)
**C08G 18/755; C08F 255/026; C08G 18/4825; C08G 18/672; C09J 4/06; C09J 175/16** (Cont.)

(86) International application number:
**PCT/US2019/046803**

(87) International publication number:
**WO 2020/037195 (20.02.2020 Gazette 2020/08)**

(54) **TWO-PART, CYANOACRYLATE/FREE RADICALLY CURABLE ADHESIVE SYSTEMS**

ZWEITEILIGE CYANOACRYLAT-/FREIRADIKALISCH HÄRTBARE HAFTSYSTEME

SYSTÈMES ADHÉSIFS CYANOACRYLATE EN DEUX PARTIES DURCISSABLES PAR VOIE RADICALAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.08.2018 US 201862765171 P**

(43) Date of publication of application:
**23.06.2021 Bulletin 2021/25**

(73) Proprietor: **Henkel AG & Co. KGaA**
**40589 Düsseldorf (DE)**

(72) Inventors:
- **ATTARWALA, Shabbir T.**
  **Simsbury, Connecticut 06070 (US)**
- **HIRE, Chetan**
  **Glastonbury, Connecticut 06033 (US)**
- **DAVIS, Jesse**
  **Hartford, Connecticut 06103 (US)**
- **MESSANA, Andrew D.**
  **Newington, Connecticut 06111 (US)**

(56) References cited:
**JP-A- S56 127 609**
**US-A1- 2014 004 354**
**US-A1- 2014 329 959**
**US-B2- 8 986 847**
**US-B2- 9 365 750**
**US-B2- 9 371 470**
**US-B2- 9 371 473**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 837 327 B1

(52) Cooperative Patent Classification (CPC): (Cont.)

C-Sets
**C08F 255/026, C08F 222/322;**
**C08G 18/672, C08G 18/48;**
**C09J 4/06, C08F 290/067;**
C08F 222/322, C08F 222/1065, C08F 230/02;
C09J 4/06, C08F 255/026

## Description

## BACKGROUND

### Field

Two-part cyanoacrylate/free radically curable adhesive systems are provided.

### Brief Discussion of Related Technology

Curable compositions such as cyanoacrylate adhesives are well recognized for their excellent ability to rapidly bond a wide range of substrates, generally in a number of minutes and depending on the particular substrate, often in a number of seconds.

Polymerization of cyanoacrylates is initiated by nucleophiles found under normal atmospheric conditions on most surfaces. The initiation by surface chemistry means that sufficient initiating species are available when two surfaces are in close contact with a small layer of cyanoacrylate between the two surfaces. Under these conditions a strong bond is obtained in a short period of time. Thus, in essence the cyanoacrylate often functions as an instant adhesive.

Cyanoacrylate adhesive performance, particularly durability, oftentimes becomes suspect when exposed to elevated temperature conditions and/or high relative humidity conditions. To combat these application-dependent shortcomings, a host of additives have been identified for inclusion in cyanoacrylate adhesive formulations. Improvements would still be seen as beneficial.

A variety of additives and fillers have been added to cyanoacrylate compositions to modify physical properties.

For instance, U.S. Patent No. 3,183,217 to Serniuk et al. discloses free radical polymerization of a methacrylic acid or methyl methacrylate monomer with a non-polar or mildly polar olefin where the monomer is complexed with a Friedel-Crafts halide.

U.S. Patent No. 3,963,772 to Takeshita discloses liquid telomers of alkylene and acrylic monomers which result in short chain alternating copolymers substantially terminated at one end of the polymer chains with the more reactive alkylene units. The liquid telomers are useful in making elastomeric polymers for high molecular weight rubbers which permit the ready incorporation of fillers, additives, and the like, due to its liquid phase.

U.S. Patent No. 4,440,910 to O'Connor is directed to cyanoacrylate compositions having improved toughness, achieved through the addition of elastomers, i.e., acrylic rubbers. These rubbers are either (i) homopolymers of alkyl esters of acrylic acid; (ii) copolymers of another polymerizable monomer, such as lower alkenes, with an alkyl ester of acrylic acid or with an alkoxy ester of acrylic acid; (iii) copolymers of alkyl esters of acrylic acid; (iv) copolymers of alkoxy esters of acrylic acid; and (v) mixtures thereof.

U.S. Patent No. 4,560,723 to Millet et al. discloses a cyanoacrylate adhesive composition containing a toughening agent comprising a core-shell polymer and a sustainer comprising an organic compound containing one or more unsubstituted or substituted aryl groups. The sustainer is reported to improve retention of toughness after heat aging of cured bonds of the adhesive. The core-shell polymer is treated with an acid wash to remove any polymerization-causing impurities such as salts, soaps or other nucleophilic species left over from the core-shell polymer manufacturing process.

U.S. Patent No. 5,340,873 to Mitry discloses a cyanoacrylate adhesive composition having improved toughness by including an effective toughening amount of a polyester polymer derived from a dibasic aliphatic or aromatic carboxylic acid and a glycol.

U.S. Patent No. 5,994,464 to Ohsawa et al. discloses a cyanoacrylate adhesive composition containing a cyanoacrylate monomer, an elastomer miscible or compatible with the cyanoacrylate monomer, and a core-shell polymer being compatible, but not miscible, with the cyanoacrylate monomer.

U.S. Patent No. 6,833,196 to Wojciak discloses a method of enhancing the toughness of a cyanoacrylate composition between steel and EPDM rubber substrates. The disclosed method is defined by the steps of: providing a cyanoacrylate component; and providing a toughening agent comprising methyl methacrylic monomer and at least one of butyl acrylic monomer and isobornyl acrylic monomer, whereby the acrylic monomer toughening agent enhances the toughness of the cyanoacrylate composition such that whereupon cure, the cyanoacrylate composition has an average tensile shear strength of over about 4400 psi after 72 hours at room temperature cure and 2 hours post cure at 121°C.

Reactive acrylic adhesives that cure by free radical polymerization of (meth)acrylic esters (i.e., acrylates) are known, but suffer from certain drawbacks. Commercially important acrylic adhesives tend to have an offensive odor, particularly those that are made from methyl methacrylate. Methyl methacrylate-based acrylic adhesives also have low flash points (approximately 59°F). Low flash points are particularly an issue during storage and transportation of the adhesives. If the flash point is 141°F or lower, the U.S. Department of Transportation classifies the product as "Flammable" and requires marking and special storage and transportation conditions.

U.S. Patent No. 6,562,181 to Righettini intended to provide a solution to the problem addressed in the preceding paragraph by describing an adhesive composition comprising: (a) a trifunctional olefinic first monomer comprising an olefinic group that has at least three functional groups each bonded directly to the unsaturated carbon atoms of said olefinic group; (b) an olefinic second monomer that is copolymerizable with the first monomer; (c) a redox initiator system, and (d) a reactive diluent, where the composition is a liquid at room temperature is 100% reactive and substantially free of volatile organic solvent, and is curable at room temperature.

And more recently, U.S. Patent No. 9,371,470 to Burns described and claimed a two-part curable composition comprising (a) a first part comprising a cyanoacrylate component and a peroxide initiator; and (b) a second part comprising a free radical curable component and a transition metal. When mixed together the peroxide catalyst initiates cure of the free radical curable component and the transition metal initiates cure of the cyanoacrylate component. In a particular embodiment, the peroxide catalyst is t-butyl perbenzoate.

JPS56127609A discloses a two-part type curable composition containing a first part comprising a cyanoacrylate composition obtained by incorporating a stabilizer with 2-cyanoacrylate monomer as the other component; and a second comprising a redox type acrylate composition obtained by incorporating a methacrylate or acrylate with preferably 0.5-5wt% organic peroxide, e.g. dicumyl peroxide, and a sulfur compound of the thiourea type. In one example, ethyl-2-cyanoacrylate is used as 2-cyanoacrylate, benzyl thiourea is used a thiourea derivative, and t-butyl hydroperoxide is used as peroxide.

And U.S. Patent Nos. 8,986,847 to Jacobine et al., 9,365,750 to Birkett et al., and 9,371,473 to Birkett et al. are each directed to two part curable compositions comprising Part A: one or more compounds within structures I or IA below:

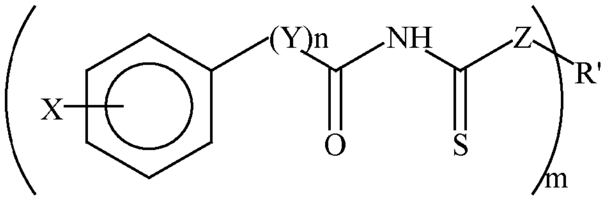

I

wherein Z is O or N-R, where R is selected from hydrogen, alkyl, alkenyl, aryl, hydroxyalkyl, hydroxyalkenyl, alkylene (meth)acrylate, carbonyl, carboxyl, or sulfonato, and R' taken together form a carbocyclic or hetero atom-containing ring, or R' is a direct bond attaching to the phenyl ring; X is halogen, alkyl, alkenyl, cycloalkyl, hydroxyalkyl, hydroxyalkenyl, alkoxy, amino, alkylene- or alkenylene-ether, alkylene (meth)acrylate, carbonyl, carboxyl, nitroso, sulfonate, hydroxyl or haloalkyl; and Y is $-SO_2NH-$, -CONH-, -NH-, and - $PO(NHCONHCSNH_2)NH-$; and n is 0 or 1 and m is 1 or 2, or

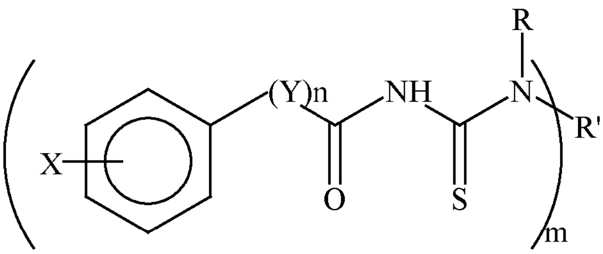

IA

wherein R and R' are independently selected from hydrogen, alkyl, alkenyl, aryl, hydroxyalkyl, hydroxyalkenyl, alkylene (meth)acrylate, carbonyl, carboxyl, or sulfonato, or R and R' taken together form a carbocyclic or hetero atom-containing ring, or R' is a direct bond attaching to the phenyl ring; X is halogen, alkyl, alkenyl, cycloalkyl, hydroxyalkyl, hydroxyalkenyl, alkoxy, amino, alkylene- or alkenylene-ether, alkylene (meth)acrylate, carbonyl, carboxyl, sulfonate, hydroxyl or haloalkyl; and Y is $-SO_2NH-$, -CONH-, -NH-, and $-PO(NHCONHCSNH_2)NH-$; and n is 0 or 1 and m is 1 or 2; and Part B: an oxidant, where at least one of Part A or Part B comprises a (meth)acrylate component.

Notwithstanding the state of the art, it would be desirable to provide an adhesive system having both the features of an instant adhesive, such as in terms of the fast fixture times and ability to bond a wide range of substrates such as metals and plastics observed with cyanoacrylates, together with the improved bond strength over a greater variety and/or selection of substrates seen with (meth)acrylate compositions. And it would be desirable to provide a two-part reactive adhesive with reduced odor and flammability that could be mixed at a 1:1 volume ratio without comprising shelf life stability

or adhesive performance. In addition, it would be desirable for the two-part reactive adhesive to be toughened so that reaction products thereof can withstand exposure to a variety of extreme conditions without sacrificing useful bond strength.

## SUMMARY

There is provided in one aspect a two-part cyanoacrylate/free radically curable composition comprising:

(a) a first part comprising a cyanoacrylate component which is ethyl-2-cyanoacrylate, and a peroxide catalyst which is t- butyl perbenzoate or cumene hydroperoxide; and
(b) a second part comprising a free radical curable component selected from a (meth)acrylate component, maleimide-, itaconamide- or nadimide-containing compounds, and combinations thereof, and a derivative of benzoylthiourea or benzoylthiourethane as disclosed in appended claim 1.

When mixed together, the peroxide catalyst of the first part initiates cure of the free radically curable component of the second part and the derivative of benzoylthiourea or benzoylthiourethane of the second part activates the peroxide catalyst of the first part.

The compositions, which are room temperature curable as the first part and the second part do not interact prior to use on mixing, provide good performance across substrates constructed from a wide variety of materials and provide improved durability performance over conventional cyanoacrylate compositions and improved fixture time and improved bond strength over conventional free radical curable compositions.

## DETAILED DESCRIPTION

### Part A

The cyanoacrylate component is ethyl-2-cyanoacrylate ("ECA") .

The cyanoacrylate component should be included in the Part A composition in an amount within the range of from about 50 weight percent to about 99.98 weight percent, such as about 90 weight percent to about 99 weight percent being desirable, and about 92 weight percent to about 97 weight percent of the Part A composition being particularly desirable.

As the peroxide catalyst to be included in the Part A composition of the two-part adhesive system, t-butylperbenzoate or cumene hydroperoxide is used.

Typically, the amount of peroxide catalyst should fall in the range of about 0.001 weight percent up to about 10.00 weight percent of the composition, desirably about 0.01 weight percent up to about 5.00 weight percent of the composition, such as about 0.50 to 2.50 weight percent of the composition.

Additives may be included in the Part A composition of the adhesive system to modify physical properties, such as improved fixture speed, improved shelf-life stability, flexibility, thixotropy, increased viscosity, color, and improved toughness. Such additives therefore may be selected from accelerators, free radical stabilizers, anionic stabilizers, gelling agents, thickeners [such as PMMAs], thixotropy conferring agents (such as fumed silica), dyes, toughening agents, plasticizers and combinations thereof.

One or more accelerators may also be used in the adhesive system, particularly, in the Part A composition, to accelerate cure of the cyanoacrylate component. Such accelerators may be selected from calixarenes and oxacalixarenes, silacrowns, crown ethers, cyclodextrins, poly(ethyleneglycol) di(meth)acrylates, ethoxylated hydric compounds and combinations thereof.

Of the calixarenes and oxacalixarenes, many are known, and are reported in the patent literature. See e.g. U.S. Patent Nos. 4,556,700, 4,622,414, 4,636,539, 4,695,615, 4,718,966, and 4,855,461.

For instance, as regards calixarenes, those within the structure below are useful herein:

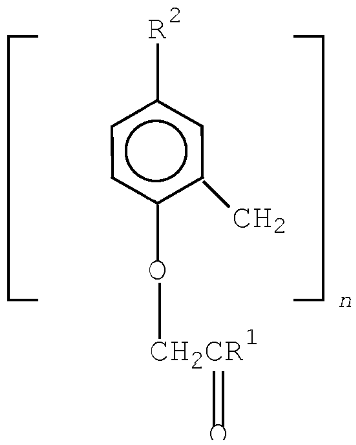

where $R^1$ is alkyl, alkoxy, substituted alkyl or substituted alkoxy; $R^2$ is H or alkyl; and n is 4, 6 or 8.

One particularly desirable calixarene is tetrabutyl tetra[2-ethoxy-2-oxoethoxy]calix-4-arene.

A host of crown ethers are known. For instance, examples which may be used herein either individually or in combination include 15-crown-5, 18-crown-6, dibenzo-18-crown-6, benzo-15-crown-5-dibenzo-24-crown-8, dibenzo-30-crown-10, tribenzo-18-crown-6, asym-dibenzo-22-crown-6, dibenzo-14-crown-4, dicyclohexyl-18-crown-6, dicyclohexyl-24-crown-8, cyclohexyl-12-crown-4, 1,2-decalyl-15-crown-5, 1,2-naphtho-15-crown-5, 3,4,5-naphtyl-16-crown-5, 1,2-methyl-benzo-18-crown-6, 1,2-methylbenzo-5, 6-methylbenzo-18-crown-6, 1,2-t-butyl-18-crown-6, 1,2-vinylbenzo-15-crown-5, 1,2-vinylbenzo-18-crown-6, 1,2-t-butyl-cyclohexyl-18-crown-6, asym-dibenzo-22-crown-6 and 1,2-benzo-1,4-benzo-5-oxygen-20-crown-7. See U.S. Patent No. 4,837,260 (Sato).

Of the silacrowns, again many are known, and are reported in the literature. For instance, a typical silacrown may be represented within the structure below:

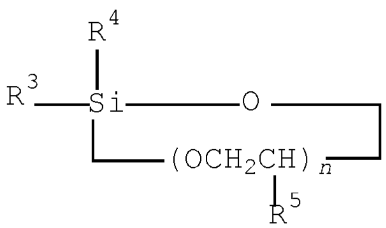

where $R^3$ and $R^4$ are organo groups which do not themselves cause polymerization of the cyanoacrylate monomer, $R^5$ is H or $CH_3$ and n is an integer of between 1 and 4. Examples of suitable $R^3$ and $R^4$ groups are R groups, alkoxy groups, such as methoxy, and aryloxy groups, such as phenoxy. The $R^3$ and $R^4$ groups may contain halogen or other substituents, an example being trifluoropropyl. However, groups not suitable as $R^4$ and $R^5$ groups are basic groups, such as amino, substituted amino and alkylamino.

Specific examples of silacrown compounds useful in the inventive compositions include:

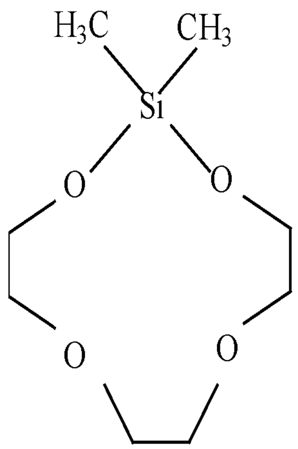

dimethylsila-11-crown-4;

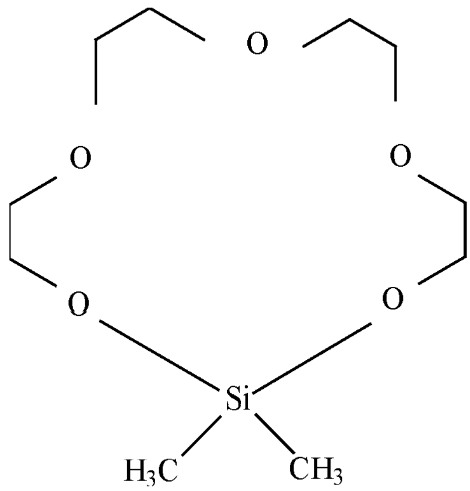

dimethylsila-14-crown-5;

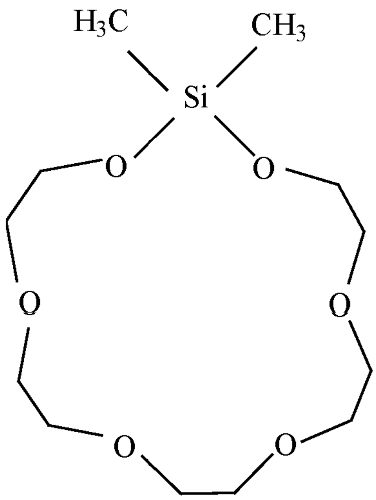

and dimethylsila-17-crown-6. See e.g. U.S. Patent No. 4,906,317 (Liu).

Many cyclodextrins may be used in connection with the present invention. For instance, those described and claimed in U.S. Patent No. 5,312,864 (Wenz), as hydroxyl group derivatives of an α, β or γ-cyclodextrin which is at least partly soluble in the cyanoacrylate would be appropriate choices for use herein as an accelerator component.

In addition, poly(ethylene glycol) di(meth)acrylates suitable for use herein include those within the structure below:

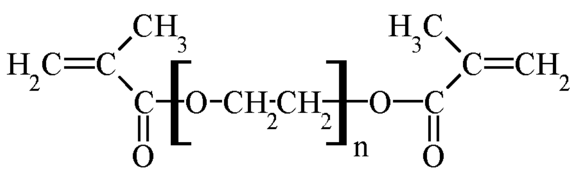

where n is greater than 3, such as within the range of 3 to 12, with n being 9 as particularly desirable. More specific examples include PEG 200 DMA (where n is about 4), PEG 400 DMA (where n is about 9), PEG 600 DMA (where n is about 14), and PEG 800 DMA (where n is about 19), where the number (e.g., 400) represents the average molecular weight of the glycol portion of the molecule, excluding the two methacrylate groups, expressed as grams/mole (i.e., 400 g/mol). A particularly desirable PEG DMA is PEG 400 DMA.

And of the ethoxylated hydric compounds (or ethoxylated fatty alcohols that may be employed), appropriate ones may be chosen from those within the structure below:

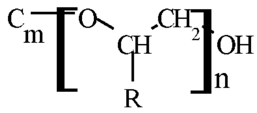

where $C_m$ can be a linear or branched alkyl or alkenyl chain, m is an integer between 1 to 30, such as from 5 to 20, n is an integer between 2 to 30, such as from 5 to 15, and R may be H or alkyl, such as $C_{1-6}$ alkyl.

In addition, accelerators embraced within the structure below:

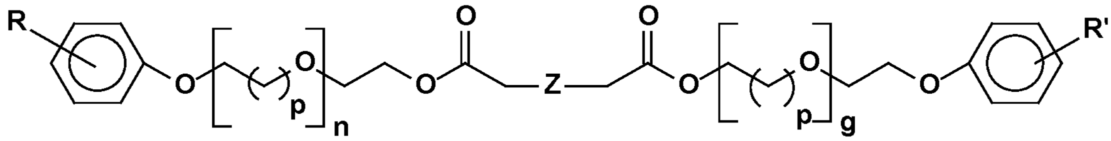

where R is hydrogen, $C_{1-6}$ alkyl, $C_{1-6}$ alkyloxy, alkyl thioethers, haloalkyl, carboxylic acid and esters thereof, sulfinic, sulfonic and sulfurous acids and esters, phosphinic, phosphonic and phosphorous acids and esters thereof, Z is a polyether linkage, n is 1-12 and p is 1-3 are as defined above, and R' is the same as R, and g is the same as n.

A particularly desirable chemical within this class as an accelerator component is

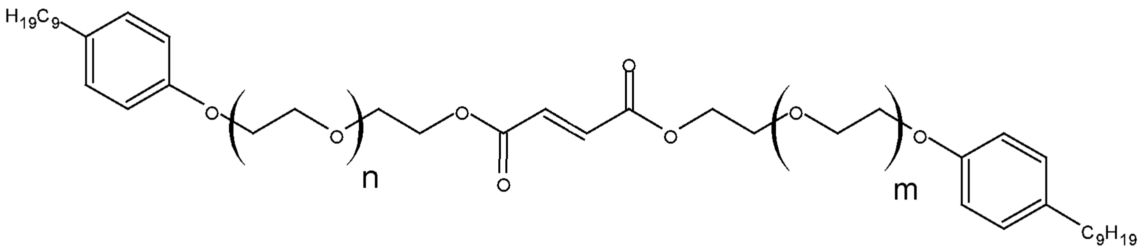

where n and m combined are greater than or equal to 12.

The accelerator should be included in the composition in an amount within the range of from about 0.01 weight percent to about 10 weight percent, with the range of about 0.1 to about 0.5 weight percent being desirable, and about 0.4 weight percent of the total composition being particularly desirable.

Stabilizers useful in the Part A composition of the adhesive system include free-radical stabilizers, anionic stabilizers and stabilizer packages that include combinations thereof. The identity and amount of such stabilizers are well known to those of ordinary skill in the art. See e.g. U.S. Patent Nos. 5,530,037 and 6, 607, 632, Commonly used free-radical stabilizers include hydroquinone, while commonly used anionic stabilizers include boron triflouride, boron trifluoride-etherate, sulphur trioxide (and hydrolyis products thereof) and methane sulfonic acid.

**Part B**

Free radical curable monomers for use in the Part B composition of the adhesive system include (meth)acrylate monomers, maleimide-, itaconamide- or nadimide-containing compounds and combinations thereof.

(Meth)acrylate monomers for use in Part B of the composition of the adhesive system include a host of (meth) acrylate monomers, with some of the (meth)acrylate monomers being aromatic, while others are aliphatic and still others are cycloaliphatic. Examples of such (meth)acrylate monomers include di-or tri-functional (meth)acrylates like polyethylene glycol di(meth)acrylates, tetrahydrofuran (meth)acrylates and di(meth)acrylates, hydroxypropyl (meth)acrylate ("HPMA"), hexanediol di(meth)acrylate, trimethylol propane tri(meth)acrylate ("TMPTMA"), diethylene glycol dimethacrylate, triethylene glycol dimethacrylate ("TRIEGMA"), benzylmethacrylate, tetraethylene glycol dimethacrylate, dipropylene glycol dimethacrylate, di-(pentamethylene glycol) dimethacrylate, tetraethylene diglycol diacrylate, diglycerol tetramethacrylate, tetramethylene dimethacrylate, ethylene dimethacrylate, neopentyl glycol diacrylate, trimethylol propane triacrylate and bisphenol-A mono and di(meth)acrylates, such as ethoxylated bisphenol-A (meth)acrylate ("EBIPMA"), bisphenol-F mono and di(meth)acrylates, such as ethoxylated bisphenol-F (meth)acrylate, and methacrylate-functional urethanes.

The maleimides, nadimides, and itaconimides include those compounds having the following structures A, B and C, respectively

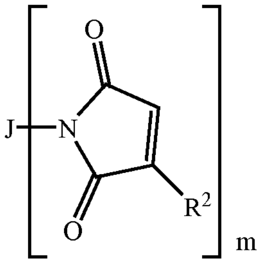
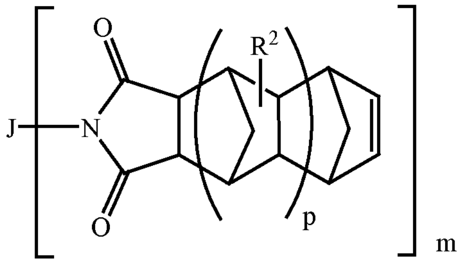
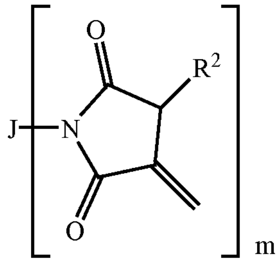

A B C

where:

$$m = 1\text{-}15,$$

$$p = 0\text{-}15,$$

each $R^2$ is independently selected from hydrogen or lower alkyl, and

J is a monovalent or a polyvalent moiety comprising organic or organosiloxane radicals, and combinations of two or more thereof.

More specific representations of the maleimides, itaconimides and nadimides include those corresponding to structures A, B, or C, where m = 1-6, p = 0, $R^2$ is independently selected from hydrogen or lower alkyl, and J is a monovalent or polyvalent radical selected from hydrocarbyl, substituted hydrocarbyl, heteroatom-containing hydrocarbyl, substituted heteroatom-containing hydrocarbyl, hydrocarbylene, substituted hydrocarbylene, heteroatom-containing hydrocarbylene, substituted heteroatom-containing hydrocarbylene, polysiloxane, polysiloxane-polyurethane block copolymer, and combinations of two or more thereof, optionally containing one or more linkers selected from a covalent bond, -O-, -S-, -NR-, -O-C(O)-, -O-C(O)-O-, -O-C(O)-NR-, -NR-C(O)-, -NR-C(O)-O-, -NR-C(O)-NR- , -S-C(O)-, -S-C(O)-O-, -S-C(O)-NR-, -S(O)-, $-S(O)_2-$, $-O-S(O)_2-$ , $-O-S(O)_2-O-$, $-O-S(O)_2-NR-$, -O-S(O)-, -O-S(O)-O-, -O-S(O)-NR-, -O-NR-C(O)-, -O-NR-C(O)-O-, -O-NR-C(O)-NR-, -NR-O-C(O)-, -NR-O-C(O)-O-, -NR-O-C(O)-NR-, -O-NR-C(S)-, -O-NR -C(S)-O-, -O-NR-C(S)-NR-, -NR-O-C(S)-, -NR-O-C(S)-O-, -NR-O-C(S) -NR-, -O-C(S)-, -O-C(S)-O-, -O-C(S)-NR-, -NR-C(S)-, -NR-C(S)-O-, -NR-C(S)-NR-, $-S-S(O)_2-$, $-S-S(O)_2-O-$, $-S-S(O)_2-NR-$ , -NR-O-S(O)-, -NR-O-S(O)-O-, -NR-O-S(O)-NR-, $-NR-O-S(O)_2-$ , $-NR-O-S(O)_2-O-$, $-NR-O-S(O)_2-NR-$, -O-NR-S(O)-, -O-NR-S(O)-O-, -O-NR-S(O)-NR-, $-O-NR-S(O)_2-O-$, $-O-NR-S(O)_2-NR-$ , $-O-NR-S(O)_2-$, $-O-P(O)R_2-$, $-S-P(O)R_2-$, $-NR-P(O)R_2-$, where each R is independently hydrogen, alkyl or substituted alkyl, and combinations of any two or more thereof.

When one or more of the above described monovalent or polyvalent groups contain one or more of the above described linkers to form the "J" appendage of a maleimide, nadimide or itaconimide group, as readily recognized by those of skill in the art, a wide variety of linkers can be produced, such as, for example, oxyalkyl, thioalkyl, aminoalkyl, carboxylalkyl, oxyalkenyl, thioalkenyl, aminoalkenyl, carboxyalkenyl, oxyalkynyl, thioalkynyl, aminoalkynyl, carboxyalkynyl, oxycycloalkyl, thiocycloalkyl, aminocycloalkyl, carboxycycloalkyl, oxycloalkenyl, thiocycloalkenyl, aminocycloalkenyl, carboxycycloalkenyl, heterocyclic, oxyheterocyclic, thioheterocyclic, aminoheterocyclic, carboxyheterocyclic, oxyaryl, thioaryl, aminoaryl, carboxyaryl, heteroaryl, oxyheteroaryl, thioheteroaryl, aminoheteroaryl, carboxyheteroaryl, oxyalkylaryl, thioalkylaryl, aminoalkylaryl, carboxyalkylaryl, oxyarylalkyl, thioarylalkyl, aminoarylalkyl, carboxyarylalkyl, oxyarylalkenyl, thioarylalkenyl, aminoarylalkenyl, carboxyarylalkenyl, oxyalkenylaryl, thioalkenylaryl, aminoalkenylaryl, carboxyalkenylaryl, oxyarylalkynyl, thioarylalkynyl, aminoarylalkynyl, carboxyarylalkynyl, oxyalkynylaryl, thioalkynylaryl, aminoalkynylaryl or carboxyalkynylaryl, oxyalkylene, thioalkylene, aminoalkylene, carboxyalkylene, oxyalkenylene, thioalkenylene, aminoalkenylene, carboxyalkenylene, oxyalkynylene, thioalkynylene, aminoalkynylene, carboxyalkynylene, oxycycloalkylene, thiocycloalkylene, aminocycloalkylene, carboxycycloalkylene, oxycycloalkenylene, thiocycloalkenyle aminoalkylarylene, carboxyalkylarylene, oxyarylalkylene, thioarylalkylene, aminoarylalkylene, carboxyarylalkylene, oxyarylalkenylene, thioarylalkenylene, aminoarylalkenylene, carboxyarylalkenylene, oxyalkenylarylene, thioalkenylarylene, aminoalkenylarylene, carboxyalkenylarylene, oxyarylalkynylene, thioarylalkynylene, aminoarylalkynylene, carboxy arylalkynylene, oxyalkynylarylene, thioalkynylarylene, aminoalkynylarylene, carboxyalkynylarylene, heteroarylene, oxyheteroarylene, thioheteroarylene, aminoheteroarylene, carboxyheteroarylene, heteroatom-containing di- or polyvalent cyclic moiety, oxyheteroatom-containing di- or polyvalent cyclic moiety, thioheteroatom-containing di- or polyvalent cyclic moiety, aminoheteroatom-containing di- or polyvalent cyclic moiety, carboxyheteroatom-containing di- or polyvalent cyclic moiety, disulfide, sulfonamide, and the like.

In another embodiment, maleimides, nadimides, and itaconimides contemplated for use in the practice of the present invention have the structures **A**, **B**, and **C**, where m = 1-6, p = 0-6, and J is selected from saturated straight chain alkyl or branched chain alkyl, optionally containing optionally substituted aryl moieties as substituents on the alkyl chain or as part of the backbone of the alkyl chain, and where the alkyl chains have up to about 20 carbon atoms; a siloxane having the structure: $-(C(R^3{}_2)_d-[Si(R^4)_2-O]_f-Si(R^4)_2-(C(R^3)_2)_e-$, $-(C(R^3)_2)_d-C(R^3)-C(O)O-(C(R^3)_2)_d-[Si(R^4)_2-O]_f-Si(R^4)_2-(C(R^3)_2)_e-O(O)C-(C(R^3)_2)_e-$, or $-(C(R^3)_2)_d-C(R^3)-O(O)C-(C(R^3)_2)_d-[Si(R^4)_2-O]_f-Si(R^4)_2-(C(R^3)_2)_e-C(O)O-(C(R^3)_2)_e-$, where:

each $R^3$ is independently hydrogen, alkyl or substituted alkyl,
each $R^4$ is independently hydrogen, lower alkyl or aryl,

$$d = 1\text{-}10,$$

$$e = 1\text{-}10,$$

and

$$f = 1\text{-}50;$$

a polyalkylene oxide having the structure:

$$[(CR_2)_r-O-]_f-(CR_2)_s-$$

where:

each R is independently hydrogen, alkyl or substituted alkyl,

$$r = 1\text{-}10,$$

$$s = 1\text{-}10,$$

and
f is as defined above;
aromatic groups having the structure:

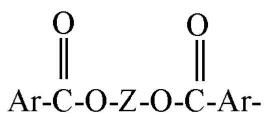

where:

each Ar is a monosubstituted, disubstituted or trisubstituted aromatic or heteroaromatic ring having in the range of 3 up to 10 carbon atoms, and
Z is:

saturated straight chain alkylene or branched chain alkylene, optionally containing saturated cyclic moieties as substituents on the alkylene chain or as part of the backbone of the alkylene chain, or
polyalkylene oxides having the structure:

$$-[(CR_2)_r-O-]_q-(CR_2)_s-$$

where:

each R is independently hydrogen, alkyl or substituted alkyl, r and s are each defined as above, and

q falls in the range of 1 up to 50;
di- or tri-substituted aromatic moieties having the structure:

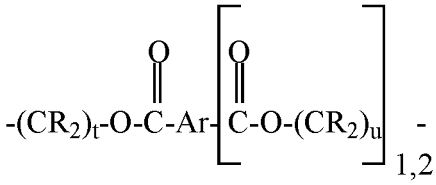

where:

each R is independently hydrogen, alkyl or substituted alkyl,
t falls in the range of 2 up to 10,
u falls in the range of 2 up to 10, and
Ar is as defined above;
aromatic groups having the structure:

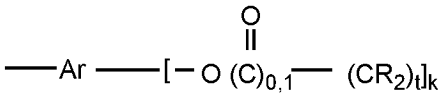,
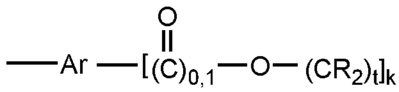,

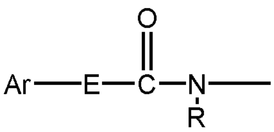,
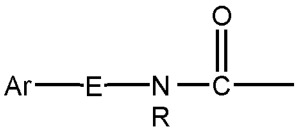,

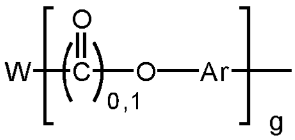
or
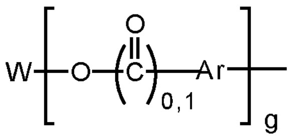

where:

each R is independently hydrogen, alkyl or substituted alkyl,

$$t = 2\text{-}10,$$

k = 1, 2 or 3,
g = 1 up to about 50,
each Ar is as defined above,
E is -O- or $-NR^5-$, where $R^5$ is hydrogen or lower alkyl; and
W is straight or branched chain alkyl, alkylene, oxyalkylene, alkenyl, alkenylene, oxyalkenylene, ester, or polyester, a siloxane having the structure $-(C(R^3)_2)_d-[Si(R^4)_2-O]_f-Si(R^4)_2-(C(R^3)_2)_e-$, $-(C(R^3)_2)_d-C(R^3)-C(O)O-(C(R^3)_2)_d-[Si(R^4)_2-O]_f-Si(R^4)_2-(C(R^3)_2)_e-O(O)C-(C(R^3)_2)_e-$, or $-(C(R^3)_2)_d-C(R^3)-O(O)C-(C(R^3)_2)_d-[Si(R^4)_2-O]_f-Si(R^4)_2-(C(R^3)_2)_e-C(O)O-(C(R^3)_2)_e-$, where:

each $R^3$ is independently hydrogen, alkyl or substituted alkyl,
each $R^4$ is independently hydrogen, lower alkyl or aryl,

$$d = 1\text{-}10,$$

$$e = 1\text{-}10,$$

and

$$f = 1\text{-}50;$$

a polyalkylene oxide having the structure:

$$-[(CR_2)_r\text{-}O\text{-}]_f\text{-}(CR_2)_s\text{-}$$

where:

each R is independently hydrogen, alkyl or substituted alkyl,

$$r = 1\text{-}10,$$

$$s = 1\text{-}10,$$

and
f is as defined above;
optionally containing substituents selected from hydroxy, alkoxy, carboxy, nitrile, cycloalkyl or cycloalkenyl;
a urethane group having the structure:

$$R^7\text{-}U\text{-}C(O)\text{-}NR^6\text{-}R^8\text{-}NR^6\text{-}C(O)\text{-}(O\text{-}R^8\text{-}O\text{-}C(O)\text{-}NR^6\text{-}R^8\text{-}NR^6\text{-}C(O))_v\text{-}U\text{-}R^8\text{-}$$

where:

each $R^6$ is independently hydrogen or lower alkyl,
each $R^7$ is independently an alkyl, aryl, or arylalkyl group having 1 to 18 carbon atoms,
each $R^8$ is an alkyl or alkyloxy chain having up to about 100 atoms in the chain, optionally substituted with Ar,
U is -O-, -S-, -N(R)-, or $-P(L)_{1,2}-$,

where R as defined above, and where each L is independently =O, =S, -OR or -R; and

$$v = 0\text{-}50;$$

polycyclic alkenyl; or mixtures of any two or more thereof.

In a more specific recitation of such maleimide-, nadimide-, and itaconimide-containing compounds of structures A, B, and C, respectively, each R is independently hydrogen or lower alkyl (such as $C_{1-4}$), -J- comprises a branched chain alkyl, alkylene, alkylene oxide, alkylene carboxyl or alkylene amido species having sufficient length and branching to render the maleimide, nadimide and/or itaconimide compound a liquid, and m is 1, 2 or 3.

Particularly desirable maleimide-containing compounds include those having two maleimide groups with an aromatic group therebetween, such as a phenyl, biphenyl, bisphenyl or napthyl linkage.

In addition to the free radical curable component, Part B also includes a derivative of benzoylthiourea or benzoylthiourethane. Examples of the derivatives benzoylthiourea or benzoylthiourethane are provided below.

The derivative of benzoylthiourea or benzoylthiourethane is defined to be one of compounds listed below:

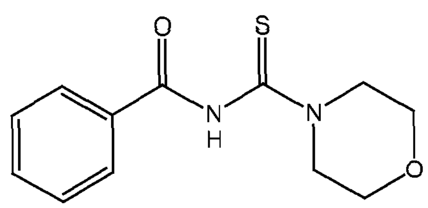

Benzoyl morpholinethiourea (BMTU)

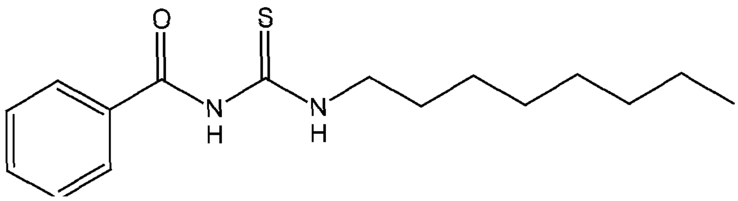

Benzoyl octylthiourea (BOTU)

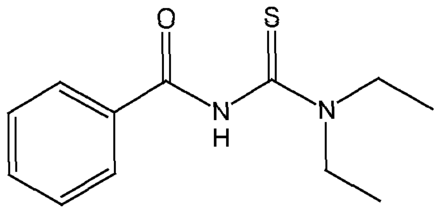

Benzoyl thiodiethylurea (BTDEU)

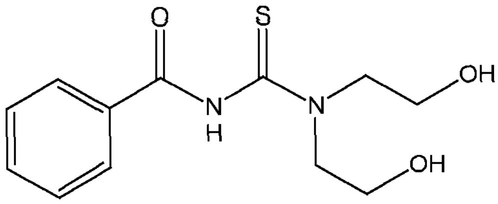

Benzoyl thiodihydroxyethylurea (BTDHEU)

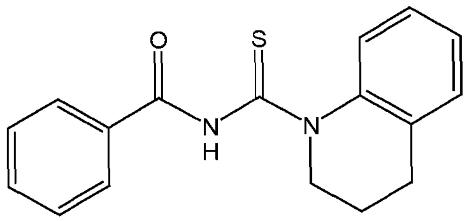

Benzoyl tetrahydroquinoline thiourea (BTHQTU)

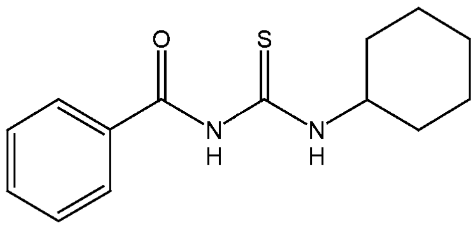

Benzoyl cyclohexylthiourea (BCHTU)

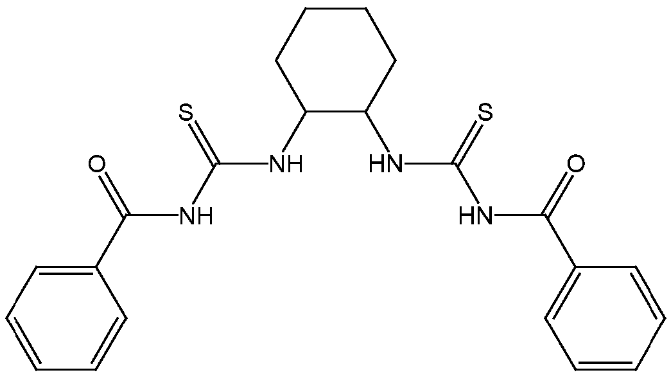

Cyclohexyl bis-Benzoylthiourea (CH bis-BTU)

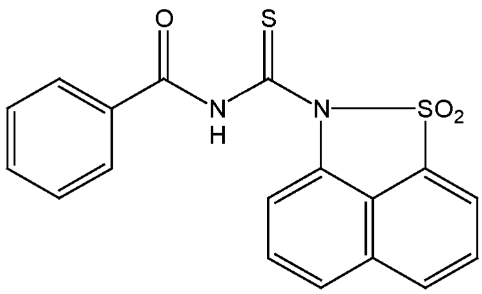

Benzoyl napthosultam thiourea (BNSTU)

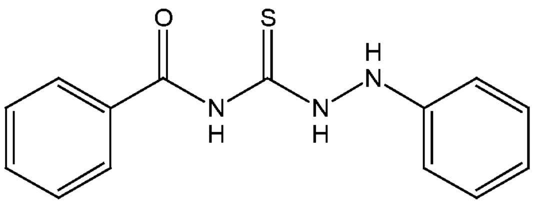

Benzoyl phenylhydrazide thiourea (BPHTU)

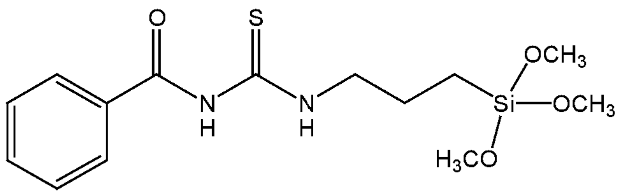

Benzoyl thiourea propyl trimethoxysilane (BTU-PTS)

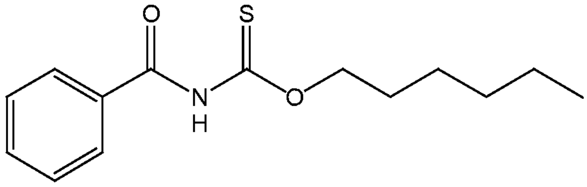

BTU-H Adduct

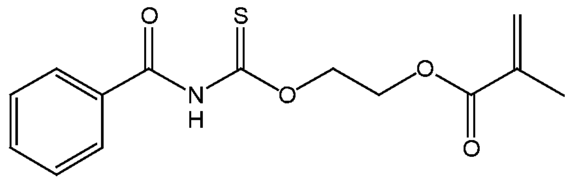

BTU-HEMA Adduct

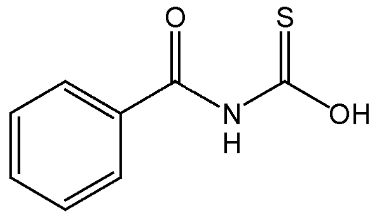

BTU-Water Adduct

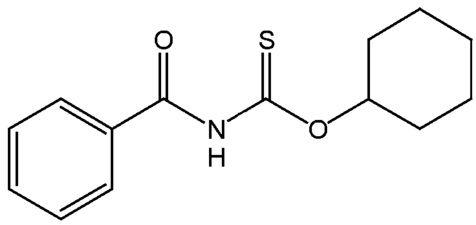

BTU-CH Adduct

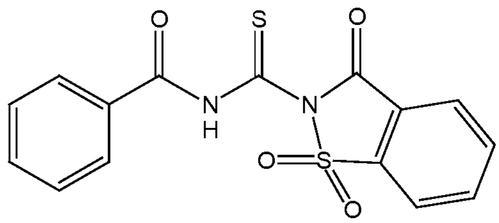

Benzoyl saccharinthiourea (BTU-BS)

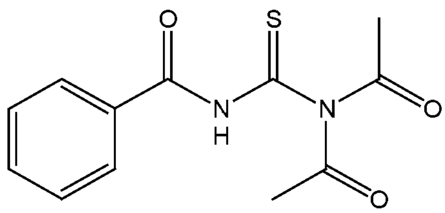

Benzoyl diacetamide urea (BDU)

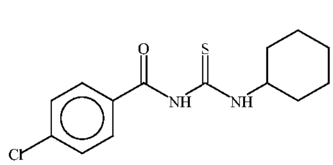

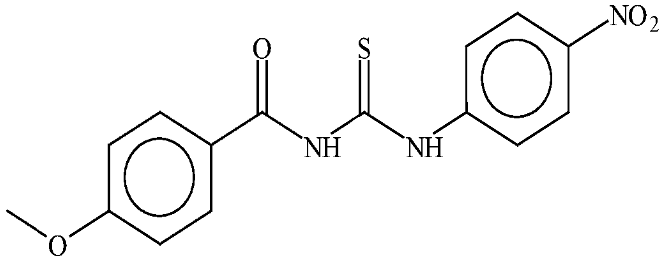

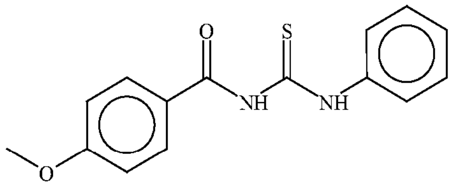

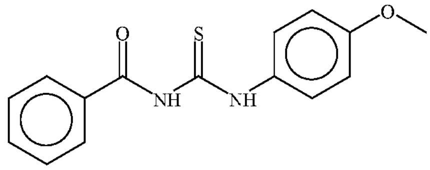

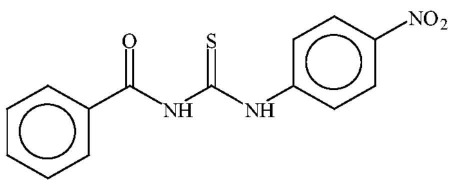

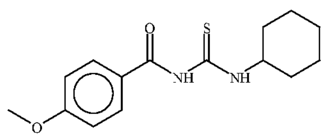

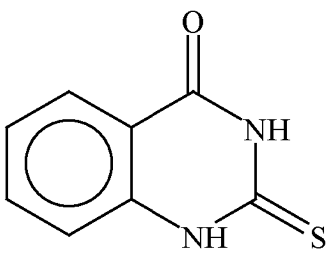

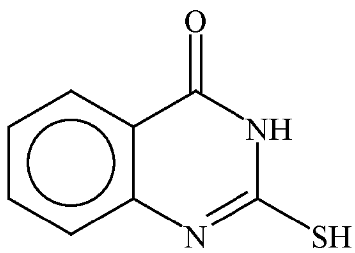

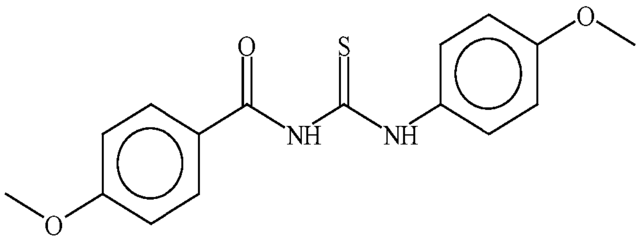

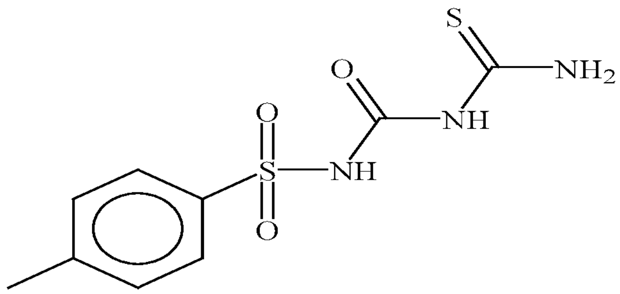

A particularly desirable derivative of benzoylthiourea or benzoylthiourethane desirably is

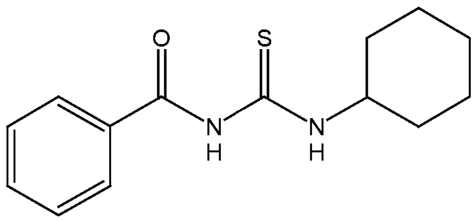

Benzoyl cyclohexylthiourea (BCHTU)

The derivatives of benzoylthiourea or benzoylthiourethane should be present in an amount of from about 0.01 weight percent to about 10 weight percent, desirably about 2 to about 5 weight percent.

As discussed above, additives may be included in either or both of the Part A or the Part B compositions to influence a variety of performance properties.

Fillers contemplated for use include, for example, aluminum nitride, boron nitride, silicon carbide, diamond, graphite, beryllium oxide, magnesia, silicas, such as fumed silica or fused silica, alumina, perfluorinated hydrocarbon polymers (i.e., TEFLON), thermoplastic polymers, thermoplastic elastomers, mica, glass powder and the like. Preferably, the particle size of these fillers will be about 20 microns or less.

As regards silicas, the silica may have a mean particle diameter on the nanoparticle size; that is, having a mean particle diameter on the order of $10^{-9}$ meters. The silica nanoparticles can be pre-dispersed in epoxy resins, and may be selected from those available under the tradename NANOCRYL, from Nanoresins, Germany. NANOCRYL is a tradename for a product family of silica nanoparticle reinforced (meth)acrylates. The silica phase consists of surface-modified, synthetic $SiO_2$ nanospheres with less than 50 nm diameter and an extremely narrow particle size distribution. The $SiO_2$ nanospheres are agglomerate-free dispersions in the (meth)acrylate matrix resulting in a low viscosity for resins containing up to 50 weight percent silica.

The silica component should be present in an amount in the range of about 1 to about 60 weight percent, such as about 3 to about 30 weight percent, desirably about 5 to about 20 weight percent, based on the total weight of the composition.

Tougheners contemplated for use particularly in the Part A composition include elastomeric polymers selected from elastomeric copolymers of a lower alkene monomer and (i) acrylic acid esters, (ii) methacrylic acid esters or (iii) vinyl acetate, such as acrylic rubbers; polyester urethanes; ethylene-vinyl acetates; fluorinated rubbers; isoprene-acrylonitrile polymers; chlorosulfinated polyethylenes; and homopolymers of polyvinyl acetate were found to be particularly useful. [See U.S. Patent No. 4,440,910 to O'Connor. The elastomeric polymers are described in the '910 patent as either homopolymers of alkyl esters of acrylic acid; copolymers of another polymerizable monomer, such as lower alkenes, with an alkyl or alkoxy ester of acrylic acid; and copolymers of alkyl or alkoxy esters of acrylic acid. Other unsaturated monomers which may be copolymerized with the alkyl and alkoxy esters of acrylic include dienes, reactive halogen-containing unsaturated compounds and other acrylic monomers such as acrylamides.

For instance, one group of such elastomeric polymers are copolymers of methyl acrylate and ethylene, manufactured by DuPont, under the name of VAMAC, such as VAMAC N123 and VAMAC B-124. VAMAC N123 and VAMAC B-124 are reported by DuPont to be a master batch of ethylene/acrylic elastomer. The DuPont material VAMAC G is a similar copolymer, but contains no fillers to provide color or stabilizers. VAMAC VCS rubber appears to be the base rubber, from which the remaining members of the VAMAC product line are compounded. VAMAC VCS (also known as VAMAC MR) is a reaction product of the combination of ethylene, methyl acrylate and monomers having carboxylic acid cure sites, which once formed is then substantially free of processing aids (such as the release agents octadecyl amine, complex organic phosphate esters and/or stearic acid), and anti-oxidants (such as substituted diphenyl amine).

DuPont provides to the market under the trade designation VAMAC VMX 1012 and VCD 6200, rubbers which are

made from ethylene and methyl acrylate. It is believed that the VAMAC VMX 1012 rubber possesses little to no carboxylic acid in the polymer backbone. Like the VAMAC VCS rubber, the VAMAC VMX 1012 and VCD 6200 rubbers are substantially free of processing aids such as the release agents octadecyl amine, complex organic phosphate esters and/or stearic acid, and anti-oxidants, such as substituted diphenyl amine, noted above. All of these VAMAC elastomeric polymers are useful herein.

In addition, vinylidene chloride-acrylonitrile copolymers [see U.S. Patent No. 4,102,945 (Gleave)] and vinyl chloride/vinyl acetate copolymers [see U.S. Patent 4,444,933 (Columbus)] may be included in the Part A composition.

Copolymers of polyethylene and polyvinyl acetate, available commercially under the trade name LEVAMELT by Lanxess Limited are useful.

A range of LEVAMELT-branded copolymers are available commercially and include for example, LEVAMELT 400, LEVAMELT 600 and LEVAMELT 900. The LEVAMELT-branded products differ in the amount of vinyl acetate present. For example, LEVAMELT 400 comprises an ethylene-vinyl acetate copolymer comprising 40 weight percent vinyl acetate. The LEVAMELT-branded products are supplied in granular form. The LEVAMELT-branded products consist of methylene units forming a saturated main chain with pendant acetate groups. The presence of a fully saturated main chain is an indication that LEVAMELT-branded copolymers are particularly stable; they does not contain any reactive double bonds which make conventional rubbers prone to aging reactions, ozone and UV light. The saturated backbone is reported to make the polymer robust.

LEVAPREN-branded copolymers, also from Lanxess, may also be used.

VINNOL-branded surface coating resins available commercially from Wacker Chemie AG, Munich, Germany represent a broad range of vinyl chloride-derived copolymers and terpolymers that are promoted for use in different industrial applications. The main constituents of these polymers are different compositions of vinyl chloride and vinyl acetate. The terpolymers of the VINNOL product line additionally contain carboxyl or hydroxyl groups. These vinyl chloride/vinyl acetate copolymers and terpolymers may also be used.

VINNOL-branded surface coating resins with carboxyl groups are terpolymers of vinyl chloride, vinyl acetate and dicarboxylic acids, varying in terms of their molar composition and degree and process of polymerization. These terpolymers are reported to show excellent adhesion, particularly on metallic substrates.

VINNOL-branded surface coating resins with hydroxyl groups are copolymers and terpolymers of vinyl chloride, hydroxyacrylate and dicarboxylate, varying in terms of their composition and degree of polymerization.

VINNOL-branded surface coating resins without functional groups are copolymers of vinyl chloride and vinyl acetate of variable molar composition and degree of polymerization.

Rubber particles, especially rubber particles that have relatively small average particle size (e.g., less than about 500 nm or less than about 200 nm), may also be included, particularly in the Part B composition. The rubber particles may or may not have a shell common to known core-shell structures.

In the case of rubber particles having a core-shell structure, such particles generally have a core comprised of a polymeric material having elastomeric or rubbery properties (i.e., a glass transition temperature less than about 0°C, e.g., less than about -30°C) surrounded by a shell comprised of a non-elastomeric polymeric material (i.e., a thermoplastic or thermoset/crosslinked polymer having a glass transition temperature greater than ambient temperatures, e.g., greater than about 50°C). For example, the core may be comprised of a diene homopolymer or copolymer (for example, a homopolymer of butadiene or isoprene, a copolymer of butadiene or isoprene with one or more ethylenically unsaturated monomers such as vinyl aromatic monomers, (meth)acrylonitrile, (meth)acrylates, or the like) while the shell may be comprised of a polymer or copolymer of one or more monomers such as (meth)acrylates (e.g., methyl methacrylate), vinyl aromatic monomers (e.g., styrene), vinyl cyanides (e.g., acrylonitrile), unsaturated acids and anhydrides (e.g., acrylic acid), (meth)acrylamides, and the like having a suitably high glass transition temperature. Other rubbery polymers may also be suitably be used for the core, including polybutylacrylate or polysiloxane elastomer (e.g., polydimethylsiloxane, particularly crosslinked polydimethylsiloxane).

Typically, the core will comprise from about 50 to about 95 weight percent of the rubber particles while the shell will comprise from about 5 to about 50 weight percent of the rubber particles.

Preferably, the rubber particles are relatively small in size. For example, the average particle size may be from about 0.03 to about 2 microns or from about 0.05 to about 1 micron. The rubber particles may have an average diameter of less than about 500 nm, such as less than about 200 nm. For example, the core-shell rubber particles may have an average diameter within the range of from about 25 to about 200 nm.

When used, these core shell rubbers allow for toughening to occur in the composition and oftentimes in a predictable manner -- in terms of temperature neutrality toward cure -- because of the substantial uniform dispersion, which is ordinarily observed in the core shell rubbers as they are offered for sale commercially.

In the case of those rubber particles that do not have such a shell, the rubber particles may be based on the core of such structures.

Desirably, the rubber particles are relatively small in size. For example, the average particle size may be from about 0.03 to about 2 μ or from about 0.05 to about 1 μ. In certain embodiments of the invention, the rubber particles have

an average diameter of less than about 500 nm. In other embodiments, the average particle size is less than about 200 nm. For example, the rubber particles may have an average diameter within the range of from about 25 to about 200 nm or from about 50 to about 150 nm.

The rubber particles may be used in a dry form or may be dispersed in a matrix, as noted above.

Typically, the composition may contain from about 5 to about 35 weight percent rubber particles.

Combinations of different rubber particles may advantageously be used in the present invention. The rubber particles may differ, for example, in particle size, the glass transition temperatures of their respective materials, whether, to what extent and by what the materials are functionalized, and whether and how their surfaces are treated.

Rubber particles that are suitable for use in the present invention are available from commercial sources. For example, rubber particles supplied by Eliokem, Inc. may be used, such as NEP R0401 and NEP R401S (both based on acrylonitrile/butadiene copolymer); NEP R0501 (based on carboxylated acrylonitrile/butadiene copolymer; CAS No. 9010-81-5); NEP R0601A (based on hydroxy-terminated polydimethylsiloxane; CAS No. 70131-67-8); and NEP R0701 and NEP 0701S (based on butadiene/styrene/2-vinylpyridine copolymer; CAS No. 25053-48-9). Also, those available under the PARALOID tradename, such as PARALOID 2314, PARALOID 2300, and PARALOID 2600, from Dow Chemical Co., Philadelphia, PA, and those available under the STAPHYLOID tradename, such as STAPHYLOID AC-3832, from Ganz Chemical Co., Ltd., Osaka, Japan.

Rubber particles that have been treated with a reactive gas or other reagent to modify the outer surfaces of the particles by, for instance, creating polar groups (e.g., hydroxyl groups, carboxylic acid groups) on the particle surface, are also suitable for use herein. Illustrative reactive gases include, for example, ozone, $Cl_2$, $F_2$, $O_2$, $SO_3$, and oxidative gases. Methods of surface modifying rubber particles using such reagents are known in the art and are described, for example, in U.S. Patent Nos. 5,382,635; 5,506,283; 5,693,714; and 5,969,053. Suitable surface modified rubber particles are also available from commercial sources, such as the rubbers sold under the tradename VISTAMER by Exousia Corporation.

Where the rubber particles are initially provided in dry form, it may be advantageous to ensure that such particles are well dispersed in the adhesive composition prior to curing the adhesive composition. That is, agglomerates of the rubber particles are preferably broken up so as to provide discrete individual rubber particles, which may be accomplished by intimate and thorough mixing of the dry rubber particles with other components of the adhesive composition.

Thickeners are also useful.

Stabilizers and inhibitors may also be employed to control and prevent premature peroxide decomposition and polymerization. The inhibitors may be selected from hydroquinones, benzoquinones, naphthoquinones, phenanthroquinones, anthraquinones, and substituted compounds thereof. Various phenols may also be used as inhibitors, such as 2,6-di-tertiary-butyl-4-methyl phenol. The inhibitors may be used in quantities of about 0.1% to about 1.0% by weight of the total composition without adverse effect on the curing rate of the polymerizable adhesive composition.

At least one of the first part or the second part may also include an organic acid having a $pK_a$ of about 12 or less, such as sulfimides, sulfonamides, citric acid, maleic acid, succinic acid, phthalic acid, di-carboxylic acid, maleic anhydride, maleic dianhydride, succinic anhydride, and phthalic anhydride.

Tougheners may be used in the Part B composition. Those contemplated for use include a (meth)acrylate-functionalized urethane resin having a backbone, at least a portion of which includes a urethane linkage formed from isophorane diisocyanate. An example of the (meth)acrylate-functionalized urethane resin is a urethane (meth)acrylate resin made from an alkylane glycol (such as polypropylene glycol), isophorane diisocyanate and hydroxy alkyl(meth) acrylate (such as hydroxyl ethyl acrylate). For instance, examples of such (meth)acrylate-functionalized urethane resin include a tetramethylene glycol urethane acrylate oligomer and a propylene glycol urethane acrylate oligomer.

Other (meth)acrylate-functionalized urethane resins include urethane (meth)acrylate oligomers based upon polyethers or polyesters, which are reacted with aromatic, aliphatic, or cycloaliphatic diisocyanates and capped with hydroxy acrylates. For instance, difunctional urethane acrylate oligomers such as a polyester of hexanedioic acid and diethylene glycol, terminated with isophorone diisocyanate, capped with 2-hydroxyethyl acrylate (CAS 72121-94-9); a polypropylene glycol terminated with tolyene-2,6-diisocyanate, capped with 2-hydroxyethylacrylate (CAS 37302-70-8); a polyester of hexanedioic acid and diethylene glycol, terminated with 4,4'-methylenebis(cyclohexyl isocyanate), capped with 2-hydroxyethyl acrylate (CAS 69011-33-2); a polyester of hexanedioic acid, 1,2-ethanediol, and 1,2 propanediol, terminated with tolylene-2,4-diisocyanate, capped with 2-hydroxyethyl acrylate (CAS 69011-31-0); a polyester of hexanedioic acid, 1,2-ethanediol, and 1,2 propanediol, terminated with 4,4'-methylenebis(cyclohexyl isocyanate, capped with 2-hydroxyethyl acrylate (CAS 69011-32-1); a polyester of hexanedioic acid, diethylene glycol, terminated with isophorone diisocyanate, capped with 2-hydroxyethyl acrylate (CAS 72121-94-9); a polytetramethylene glycol ether terminated with 4,4'-methylenebis(cyclohexylisocyanate), capped with 2-hydroxyethyl acrylate; and a hydroxy terminated polybutadiene terminated with isophorone diisocyanate, capped with 2-hydroxyethyl acrylate.

Still other (meth)acrylate-functionalized urethane resins are monofunctional urethane acrylate oligomers, such as a polypropylene terminated with 4,4'-methylenebis(cyclohexylisocyanate), capped with 2-hydroxyethyl acrylate and 1-dodosanol. They also include difunctional urethane methacrylate oligomers such as a polytetramethylene glycol ether terminated with tolylene-2,4-diisocyanate, capped with 2-hydroxyethyl methacrylate; a polytetramethylene glycol ether

terminated with isophorone diisocyanate, capped with 2-hydroxyethyl methacrylate); a polytetramethylene glycol ether terminated with 4,4'-methylenebis(cyclohexylisocyanate), capped with 2-hydroxyethyl methacrylate; and a polypropylene glycol terminated with tolylene-2,4-diisocyanate, capped with 2-hydroxyethyl methacrylate.

Alkyl (meth)acrylates useful in making the (meth)acrylate-functionalized urethane resin include isobornyl(meth) acrylate, isodecyl(meth)acrylate, lauryl(meth)acrylate, cyclic trimethylolpropane formal acrylate, octyldecyl acrylate, tetrahydrofurfuryl(meth)acrylate, tridecyl(meth)acrylate, and hydroxypropyl(meth)acrylate, among others.

Among the hydroxy alkyl(meth)acrylates are included 2-hydroxyethyl(meth)acrylate, phenoxyethyl(meth)acrylate, N-vinyl caprolactam, N,N-dimethyl acrylamide, 2(2-ethoxyethoxy) ethyl acrylate, caprolactone acrylate, polypropylene glycol monomethacrylate, 1,3-butylene glycol dimethacrylate, 1,4-butanediol dimethacrylate, 1,6 hexanediol di(meth)acrylate, tricyclodecane dimethanol di(meth)acrylate, tripropylene glycol diacrylate, ethoxylated trimethylolpropane triacrylate, trimethylolpropane triacrylate, tris(2-hydroxy ethyl) isocyanurate triacrylate, and combinations thereof.

In addition, some (meth)acrylate-functionalized urethane resins are commercially available. Examples of commercially available resins include those from Dymax Corporation, such as BR-345 (promoted by Dymax in its 2018 "BOMAR Oligomers Selected Guide," page 12 as a polyether urethane acrylate "[i]deal for 3D printing resins" with a nominal viscosity of 46,000 at 25°C and a Tg by DMA of -57°C), BR 302, BR 374-744B or BR 900. BR 3741AJ is another (meth)acrylate-functionalized urethane resin suitable for use herein. See also A. Prabhakar et al.,"Structural Investigations of Polypropylene glycol (PPG) and Isophorone diisocyanate (IPDI)-based Polyurethane Prepolymer by 1D and 2D NMR Spectroscopy", J. Polym. Sc.: Part A: Polym. Chem., 43, 1196-1209 (2005).

BR-345 [(meth)acrylate-functionalized urethane resin] may be considered made according to the following reaction scheme:

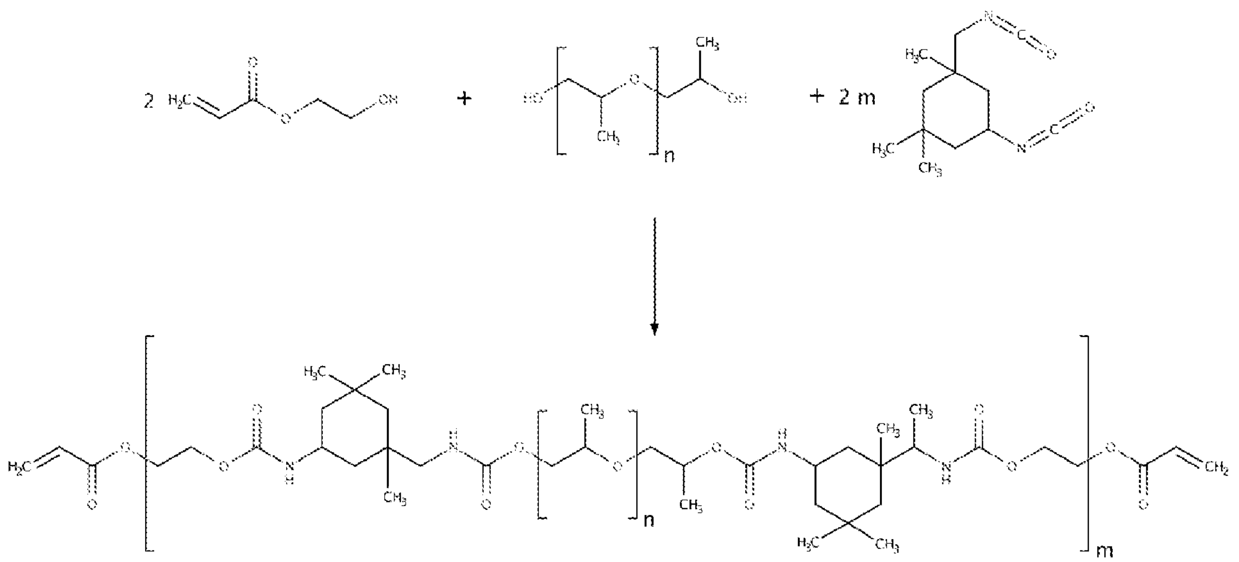

Additional commercially available (meth)acrylate-functionalized urethane resins include urethane-functionalized (meth)acrylates may also be used herein. For instance, UCB offers for sale commercially a number of such materials including those available under the trademark "EBECRYL", such as "EBECRYL" 264 [aliphatic urethane triacrylate diluted 15% with hexanediol di(meth)acrylate ("HDODA"), for providing non-yellowing, fast curing coatings with excellent abrasion and stain resistance, toughness and flexibility], "EBECRYL" 265 [aliphatic urethane triacrylate diluted 25% with tripropylene glycol diacrylate ("TRGDA")], 1290 (hexafunctional aliphatic urethane acrylate containing an acrylated polyol diluent), "EBECRYL" 8301 (hexafunctional aliphatic urethane acrylate containing an acrylated polyol diluent, for providing fast cure with excellent hardness, solvent and abrasion resistance), "EBECRYL" 220 (multi-functional aromatic urethane acrylate containing an acrylated polyol diluent, which provides extremely fast cure with excellent hardness and solvent resistance properties), and "EBECRYL" 6602 (trifunctional aromatic urethane acrylate oligomer diluted to provide coatings with good hardness, scratch and abrasion resistance properties).

In addition, Sartomer Co., Exton, Pa. offers sale commercially a number of such materials including CN 945 A60 (trifunctional urethane acrylate), CN 945 B85 (trifunctional urethane acrylate), CN 970 A60 (urethane acrylate), CN 970 E60 (urethane acrylate), CN 970 A80 (urethane acrylate), CN 972 (urethane acrylate), and CN 975 (hexafunctional urethane acrylate).

When used, the (meth)acrylate-functionalized urethane resin may be included in an amount of about 5 percent by weight to about 35 percent by weight, such as about 20 percent by weight.

In practice, each of the Part A and the Part B compositions are housed in separate containment vessels in a

device prior to use, where in use the two parts are expressed from the vessels mixed and applied onto a substrate surface. The vessels may be chambers of a dual chambered cartridge, where the separate parts are advanced through the chambers with plungers through an orifice (which may be a common one or adjacent ones) and then through a mixing dispense nozzle. Or the vessels may be coaxial or side-by-side pouches, which may be cut or torn and the contents thereof mixed and applied onto a substrate surface.

The invention will be more readily appreciated by a review of the examples, which follow.

## EXAMPLES

Reference to CA or cyanoacrylate in the Examples refers to ECA or ethyl-2-cyanoacrylate, respectively, unless otherwise noted. S.d. stands for the standard derivation of the means value recorded. Each means value is the average of five replicate samples.

### Benzoyl Cyclohexythiourea ("BCHTU") Adduct

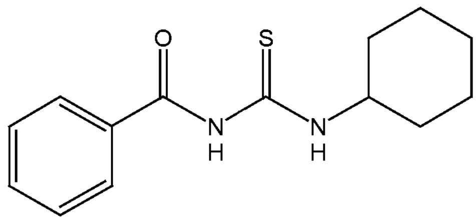

Benzoyl cyclohexylthiourea (BCHTU)

To a 250 mL 3-neck RBF equipped with a condenser, magnetic stirrer, thermo-probe, nitrogen purge and pressure-equilibrated addition funnel was added benzoyl isothiocyanate (25.0 g, 0.150 mol) followed by dichloromethane (100 mL). The mixture was cooled in an ice-water bath at a temperature below 5°C, at which point cyclohexylamine (15.0 g, 0.150 mol) and dichloromethane (100 mL) were added slowly over a period of time of about 30 minutes. The ice-water bath was removed and the reaction mixture was stirred under a nitrogen purge overnight. The reaction mixture was then concentrated *in vacuo* at a temperature of 40°C to provide an orange-yellow solid. The solid was dried to constant weight *in vacuo* at a temperature of 50°C and a pressure of <1 mTorr in a 99% yield. The solid was determined to have a melting point of 67.8°C.

With reference to Table 1, an adhesive system was prepared where the Part A composition was based on ECA, mixed with CHP together with a boron trifluoride/methane sulfonic acid combination as a stabilizer package, and an ethylene/vinyl acetate copolymer, and the Part B composition was based on an acrylate urethane ester, HPMA, and an epoxy acrylate, as reported by the manufacturer, Sartomer, together with BCHTU as a derivative of benzoylthiourea or benzoylthiourethane, a (meth)acrylated phosphate, a (meth)acrylate-functionalized urethane resin and a filler combination. The specific amount of each constituent is listed in Table 1.

**Table 1**

| Part A | | |
|---|---|---|
| **Components** | | **Sample/Amt (wt%)** |
| **Type** | **Identity** | **A1** |
| Cyanoacrylate | ECA | 68.9 |
| Peroxide | CHP | 5.0 |
| Stabilizer | $BF_3$/MSA | 3.6 |
| Toughener | LEVAPREN 900* | 22.5 |

(continued)

| Part B | | |
|---|---|---|
| Components | | Sample/Amt (wt%) |
| Type | Identity | B1 |
| (Meth) acrylate | Acrylated Urethane Ester[1] | 32.57 |
| | HPMA | 20.8 |
| | CN2003U[2] | 13.5 |
| Derivative of Benzoylthiourea or Benzoylthiourethane | BCHTU | 5.0 |
| (Meth)acrylated Phosphate | KAYAMER[3] | 0.03 |
| (Meth) acrylate-functionalized Urethane Resin | BOMAR BR-345 | 20 |
| Filler | CAB-O-SIL TS 720 | 7.5 |
| | Hombinan LW | 0.61 |

*Ethylene/vinyl acetate copolymer, available commercially from Lanxess Ltd.
[1] made in sequential steps from the reaction of diols and dicarboxylic acids to form polyester diols, followed by reaction with toluene diisocyanate and finally capping with hydroxy propyl(meth)acrylate
[2] Epoxy acrylate, as reported by the manufacturer, Sartomer division of Arkema
[3] Nippon Kayaka Co. Ltd., Tokyo, Japan

The adhesive system set forth in Table 1 was applied to a pair of substrates which were mated in an overlapped, offset manner with the adhesive system disposed therebetween, and allowed to cure for 24 hours at room temperature. The adhesive system formed an adhesive bond between the substrates.

## Claims

**1.** A two-part curable composition comprising:

(a) a first part comprising a cyanoacrylate component which is ethyl-2-cyanoacrylate and a peroxide catalyst which is t-butyl perbenzoate or cumene hydroperoxide; and
(b) a second part comprising a free radical curable component selected from a (meth)acrylate component, maleimide-, itaconamide- or nadimide-containing compounds, and combinations thereof, and a derivative of benzoylthiourea or benzoylthiourethane wherein the derivative of benzoylthiourea or benzoylthiourethane is defined to be one of compounds listed below:

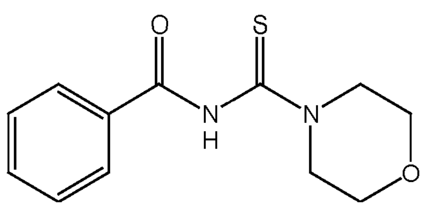

Benzoyl morpholinethiourea (BMTU)

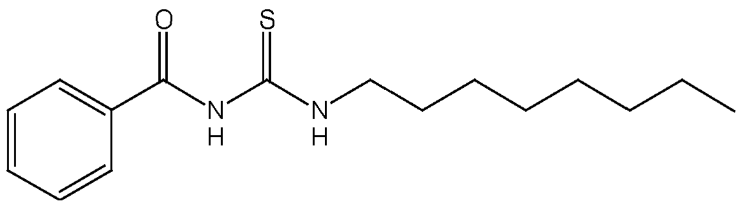

Benzoyl octylthiourea (BOTU)

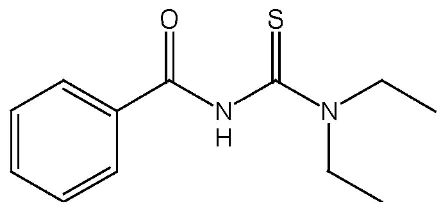

Benzoyl thiodiethylurea (BTDEU)

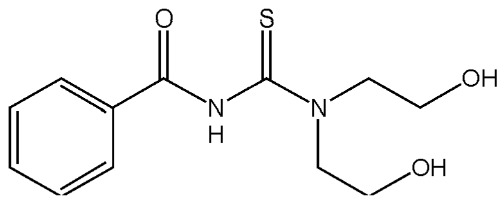

Benzoyl thiodihydroxyethylurea (BTDHEU)

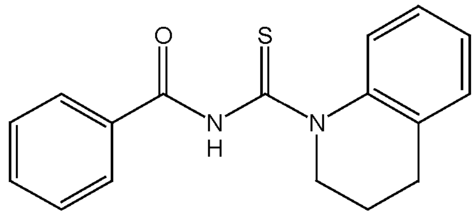

Benzoyl tetrahydroquinoline thiourea (BTHQTU)

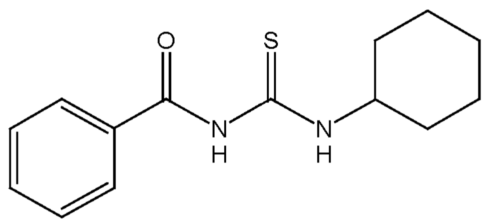

Benzoyl cyclohexylthiourea (BCHTU)

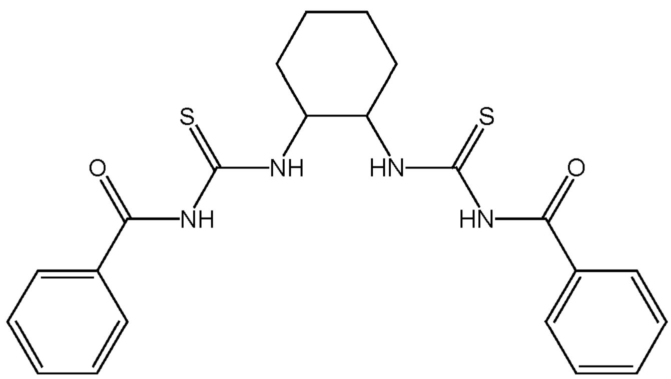

Cyclohexyl bis-Benzoylthiourea (CH bis-BTU)

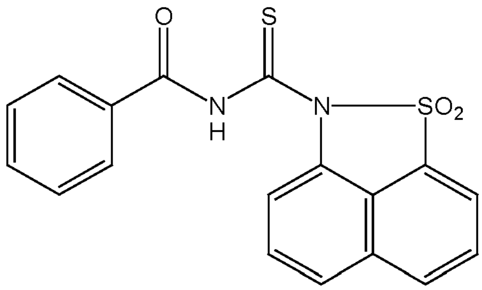

Benzoyl napthosultam thiourea (BNSTU)

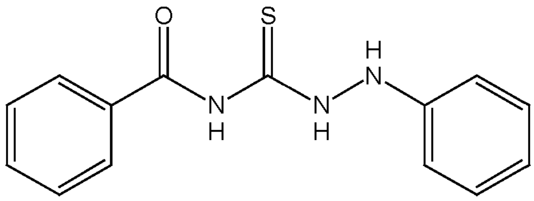

Benzoyl phenylhydrazide thiourea (BPHTU)

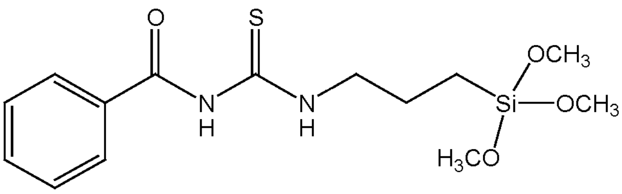

Benzoyl thiourea propyl trimethoxysilane (BTU-PTS)

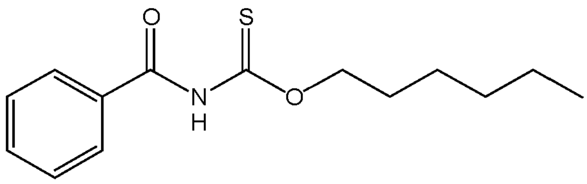

BTU-H Adduct

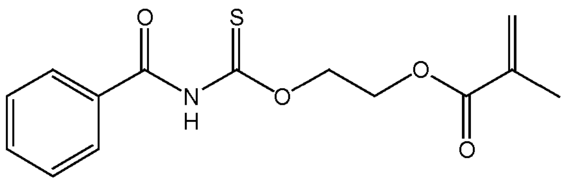

BTU-HEMA Adduct

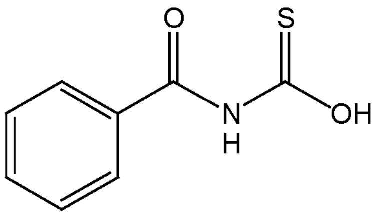

BTU-Water Adduct

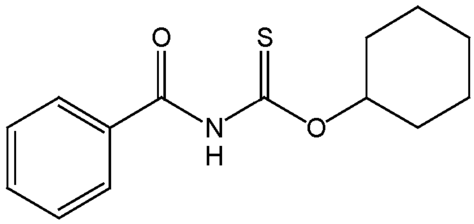

BTU-CH Adduct

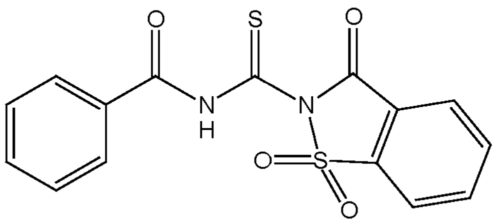

Benzoyl saccharinthiourea (BTU-BS)

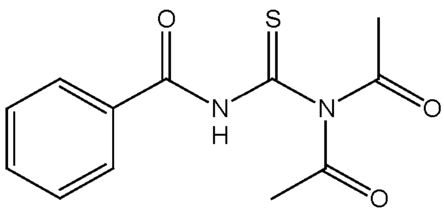

Benzoyl diacetamide urea (BDU)

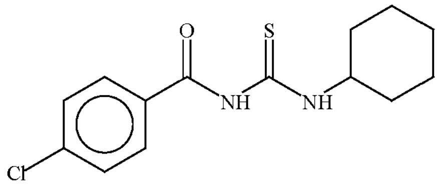

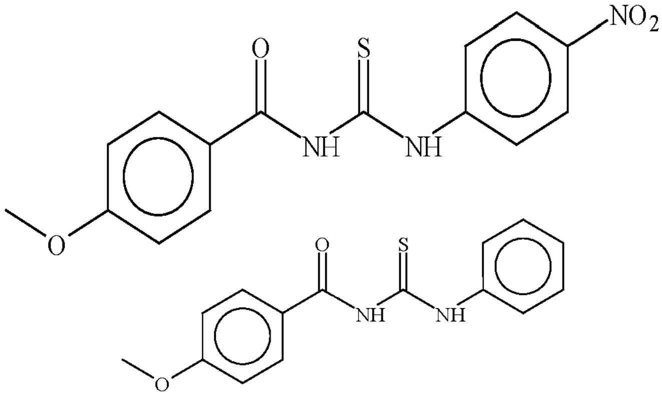

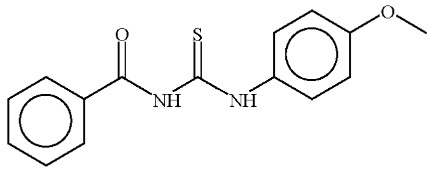

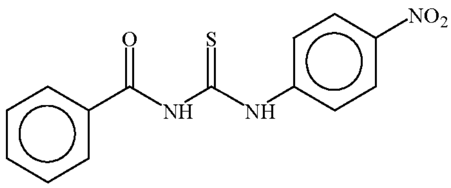

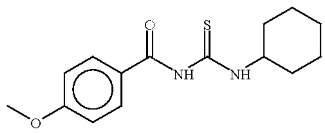

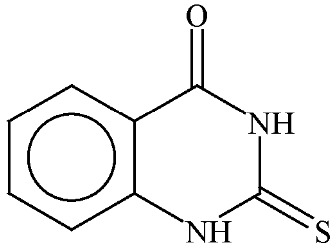

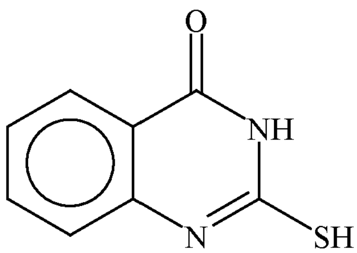

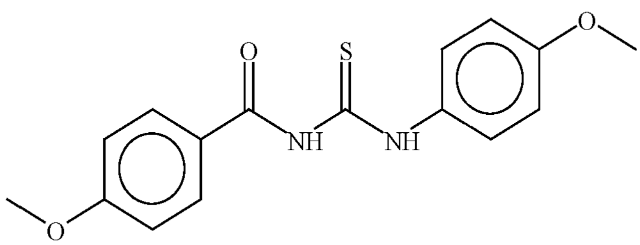

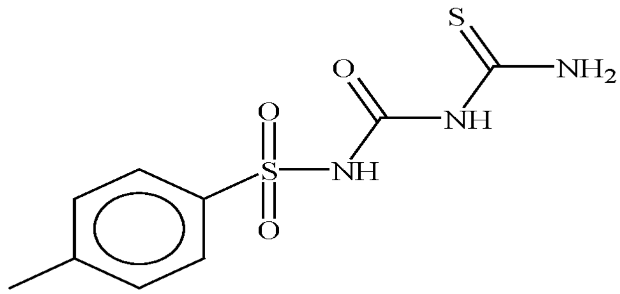

,

wherein when mixed together the peroxide catalyst initiates cure of the free radical curable component and the derivative of benzoylthiourea or benzoylthiourethane initiates cure of the cyanoacrylate component.

2. The composition of Claim 1, wherein the peroxide catalyst is present in an amount from 0.01 weight percent to 10 weight percent, by weight of the cyanoacrylate component.

3. The composition of Claim 1, wherein the free radical curable component is a (meth)acrylate component selected from the group consisting of polyethylene glycol di(meth)acrylates, tetrahydrofuran (meth)acrylates and di(meth)acrylates, hydroxypropyl (meth)acrylate, hexanediol di(meth)acrylate, trimethylol propane tri(meth)acrylate, diethylene glycol dimethacrylate, triethylene glycol dimethacrylate, benzylmethacrylate, tetraethylene glycol dimethacrylate, dipropylene glycol dimethacrylate, di-(pentamethylene glycol) dimethacrylate, tetraethylene diglycol diacrylate, diglycerol tetramethacrylate, tetramethylene dimethacrylate, ethylene dimethacrylate, neopentyl glycol diacrylate, trimethylol propane triacrylate, bisphenol-A mono and di(meth)acrylates, ethoxylated bisphenol-A (meth)acrylate, and bisphenol-F mono and di(meth)acrylates.

4. The composition of Claim 1, wherein the first part is housed in a first chamber of a dual chamber syringe and the second part is housed in a second chamber of the dual chamber syringe or
wherein the first part and the second part are each housed in a separate chamber of a dual chambered container.

5. The composition of Claim 1, wherein the second part further comprises at least one of a plasticizer, a filler and a toughener, wherein the toughener is preferably a member selected from the group consisting of (a) reaction products of the combination of ethylene, methyl acrylate and monomers having carboxylic acid cure sites, (b) dipolymers of ethylene and methyl acrylate, (c) combinations of (a) and (b), (4) vinylidene chloride-acrylonitrile copolymers, (5) and vinyl chloride/vinyl acetate copolymer, (6) copolymers of polyethylene and polyvinyl acetate, and combinations thereof.

6. The composition of Claim 1, wherein the first part and the second part are present in a ratio of 1:1 by volume.

## Patentansprüche

1. Zweiteilige härtbare Zusammensetzung, umfassend:

(a) einen ersten Teil, umfassend eine Cyanoacrylatkomponente, bei der es sich um Ethyl-2-Cyanoacrylat handelt, und einen Peroxidkatalysator, bei dem es sich um t-Butylperbenzoat oder Cumolhydroperoxid handelt; und
(b) einen zweiten Teil, umfassend eine durch freie Radikale härtbare Komponente, die aus einer (Meth) acrylatkomponente, maleimid-, itaconamid- oder nadimidhaltigen Verbindungen und Kombinationen davon ausgewählt ist, und ein Derivat von Benzoylthioharnstoff oder Benzoylthiourethan, wobei das Derivat von Benzoylthioharnstoff oder Benzoylthiourethan als eine der unten aufgeführten Verbindungen definiert ist:

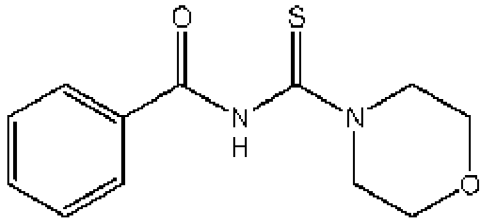

Benzoylmorpholinthioharnstoff (BMTU)

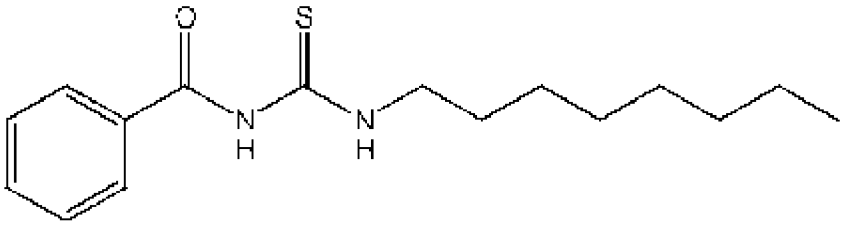

Benzoyloctylthioharnstoff (BOTU)

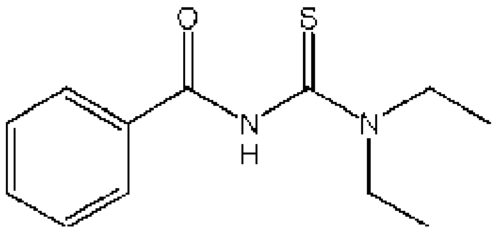

Benzoylthiodiethylharnstoff (BTDEU)

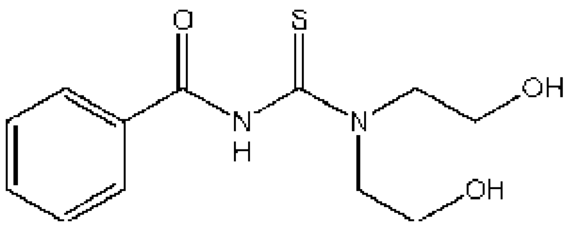

Benzoylthiodihydroxyethylharnstoff (BTDHEU)

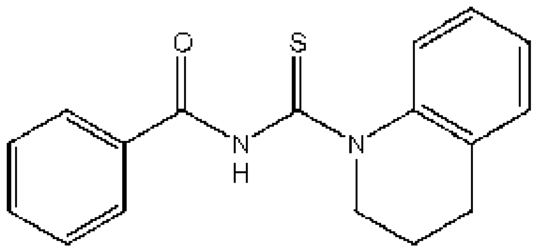

Benzoyltetrahydrochinolinthioharnstoff (BTHQTU)

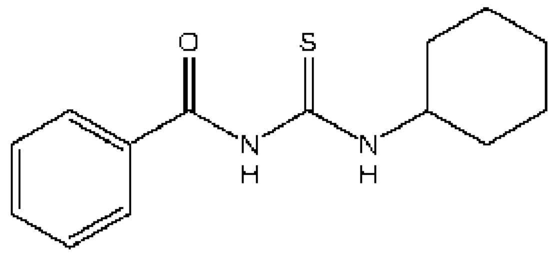

Benzoylcyclohexylthioharnstoff (BCHTU)

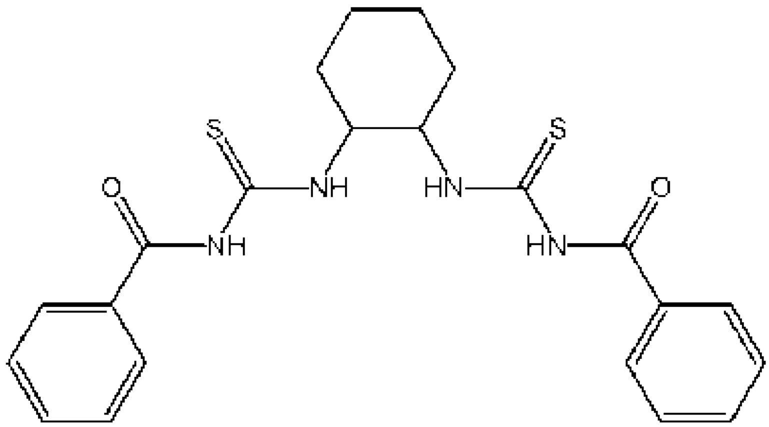

Cyclohexyl-bis-Benzoylthioharnstoff (CH bis-BTU)

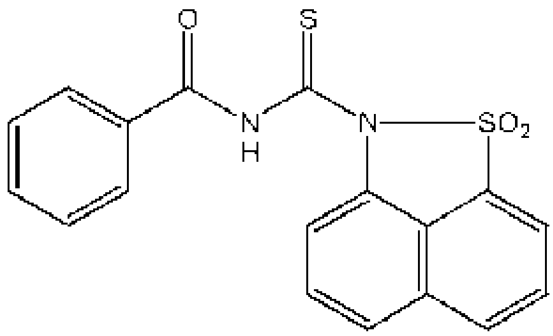

Benzoylnapthosultamthioharnstoff (BNSTU)

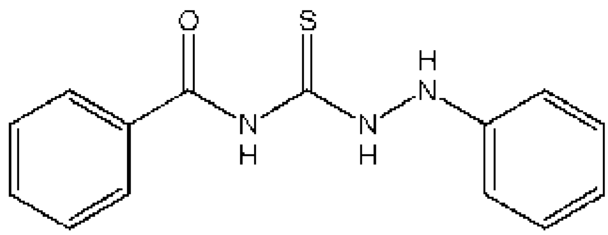

Benzoylphenylhydrazidthioharnstoff (BPHTU)

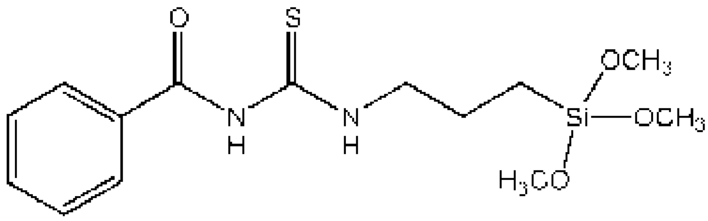

Benzoylthioharnstoffpropyltrimethoxysilan (BTU-PTS)

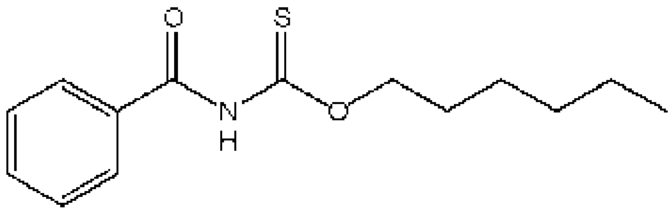

BTU-H-Addukt

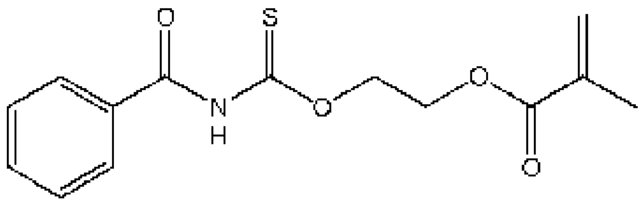

BTU-HEMA-Addukt

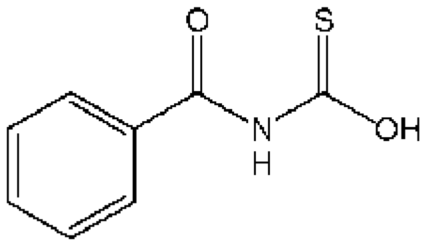

BTU-Wasser-Addukt

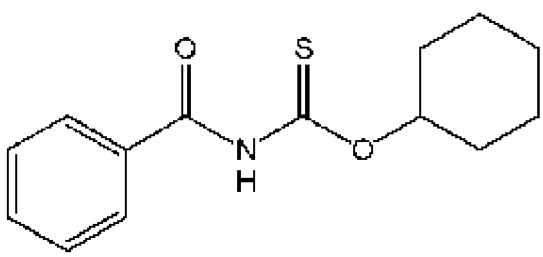

BTU-CH-Addukt

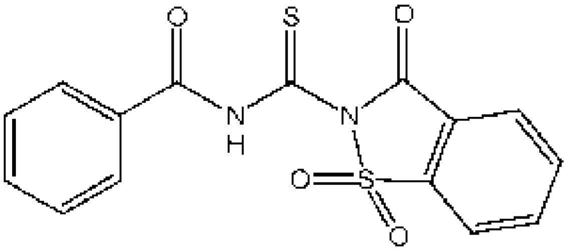

Benzoylsaccharinthioharnstoff (BTU-BS)

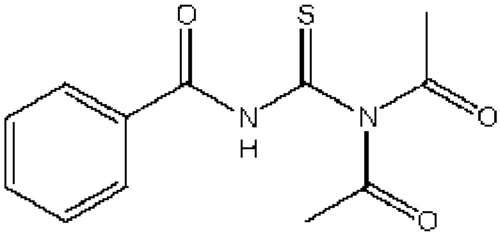

Benzoyldiacetamidharnstoff (BDU)

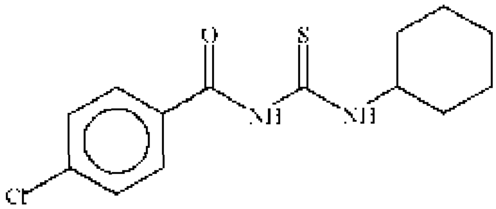

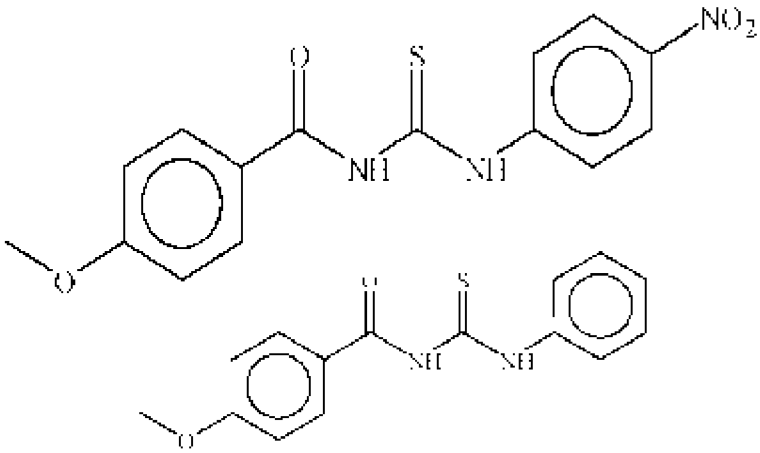

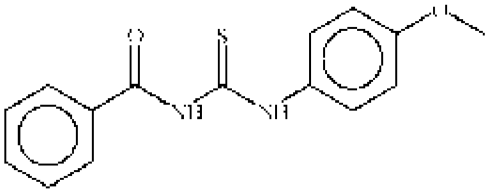

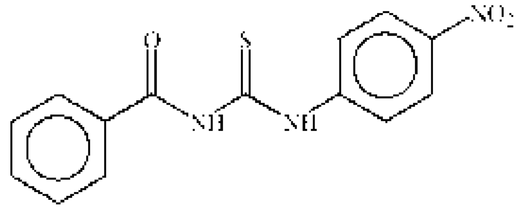

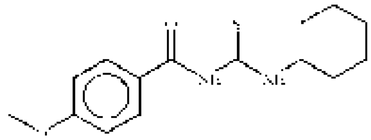

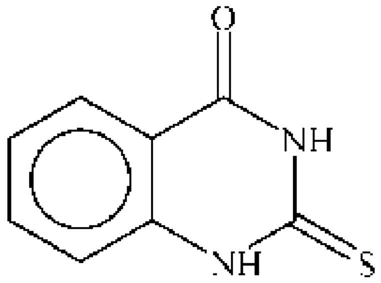

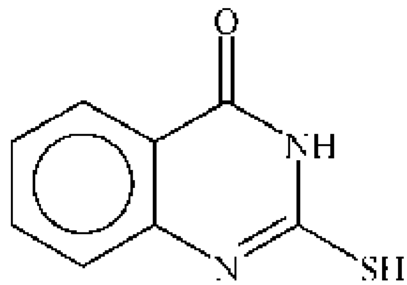

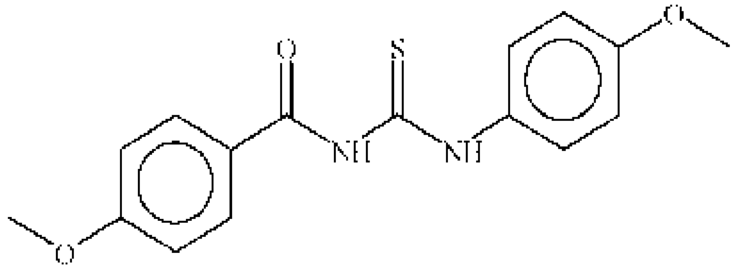

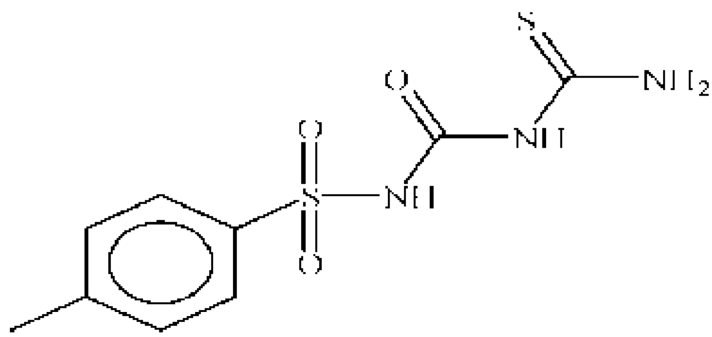

wobei, wenn zusammengemischt, der Peroxidkatalysator die Härtung der durch freie Radikale härtbaren Komponente einleitet und das Derivat von Benzoylthioharnstoff oder Benzoylthiourethan die Härtung der Cyanacrylatkomponente einleitet.

**2.** Zusammensetzung nach Anspruch 1, wobei der Peroxidkatalysator in einer Menge von 0,01 Gewichtsprozent bis 10 Gewichtsprozent, bezogen auf das Gewicht der Cyanacrylatkomponente, vorhanden ist.

**3.** Zusammensetzung nach Anspruch 1, wobei die durch freie Radikale härtbare Komponente eine (Meth)acrylatkomponente ist, die aus der Gruppe ausgewählt ist, bestehend aus Polyethylenglycoldi(meth)acrylaten, Tetrahydrofuran(meth)acrylaten und Di(meth)acrylaten, Hydroxypropyl(meth)acrylat, Hexandioldi(meth)acrylat, Trimethylolpropantri(meth)acrylat, Diethylenglycoldimethacrylat, Triethylenglycoldimethacrylat, Benzylmethacrylat, Tetraethylenglycoldimethacrylat, Dipropylenglycoldimethacrylat, Di(pentamethylenglycol)dimethacrylat, Tetraethylendiglycoldiacrylat, Diglyceroltetramethacrylat, Tetramethylendimethacrylat, Ethylendimethacrylat, Neopentylglycoldiacrylat, Trimethylolpropantriacrylat, Bisphenol-A-mono- und Di(meth)acrylaten, ethoxyliertem Bisphenol-A-(meth)acrylat und Bisphenol-F-mono- und Di(meth)acrylaten.

**4.** Zusammensetzung nach Anspruch 1, wobei der erste Teil in einer ersten Kammer einer Zwei-Kammer-Spritze untergebracht ist und der zweite Teil in einer zweiten Kammer der Zwei-Kammer-Spritze untergebracht ist oder wobei der erste Teil und der zweite Teil jeweils in einer getrennten Kammer eines Zwei-Kammer-Behälters untergebracht sind.

**5.** Zusammensetzung nach Anspruch 1, wobei der zweite Teil ferner mindestens eines von einem Weichmacher, einem Füllstoff und einem Härtemittel umfasst, wobei das Härtemittel vorzugsweise ein Element ist, das aus der Gruppe ausgewählt ist, bestehend aus (a) Umsetzungsprodukten der Kombination von Ethylen, Methylacrylat und Monomeren, die Carbonsäure-Härtungsstellen aufweisen, (b) Dipolymeren von Ethylen und Methylacrylat, (c) Kombinationen von (a) und (b), (4) Vinylidenchlorid-Acrylnitril-Copolymeren, (5) und einem Vinylchlorid/Vinylacetat-Copolymer, (6) Copolymeren von Polyethylen und Polyvinylacetat und Kombinationen davon.

**6.** Zusammensetzung nach Anspruch 1, wobei der erste Teil und der zweite Teil in einem Volumenverhältnis von 1:1 vorhanden sind.

## Revendications

**1.** Composition durcissable en deux parties comprenant :

(a) une première partie comprenant un composant cyanoacrylate qui est l'éthyl-2-cyanoacrylate et un catalyseur peroxyde qui est le perbenzoate de t-butyle ou l'hydroperoxyde de cumène ; et
(b) une seconde partie comprenant un composant durcissable par voie radicalaire choisi parmi un composant (méth)acrylate, des composés contenant du maléimide, de l'itaconamide ou du nadimide, et des combinaisons de ceux-ci, et un dérivé de benzoylthiourée ou benzoylthiouréthane, dans laquelle le dérivé de benzoylthiourée ou benzoylthiouréthane est défini comme étant l'un des composés énumérés ci-après :

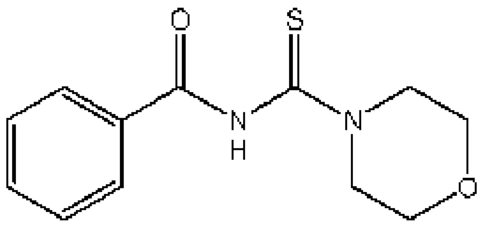

benzoyl morpholinethiourée (BMTU)

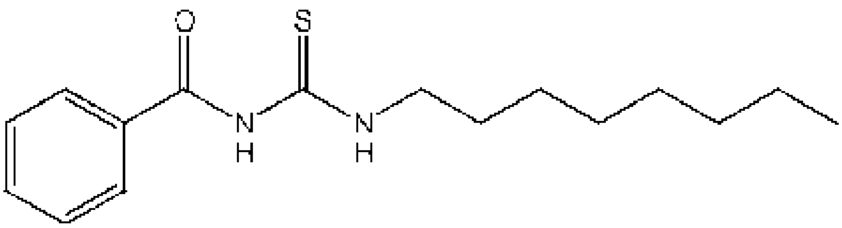

benzoyl octylthiourée (BOTU)

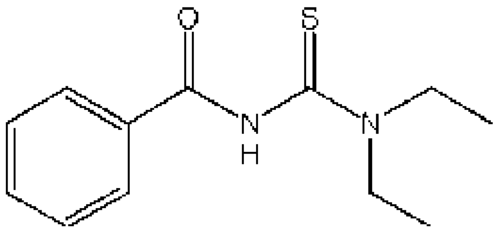

benzoyl thiodiéthylurée (BTDEU)

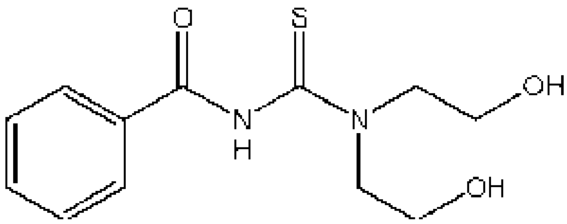

benzoyl thiodihydroxyéthylurée (BTDHEU)

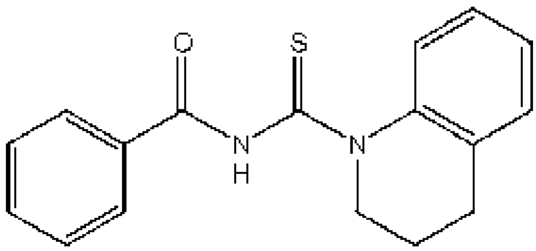

benzoyl tétrahydroquinoline thiourée (BTHQTU)

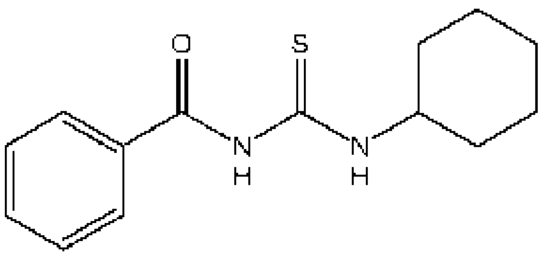

benzoyl cyclohexylthiourée (BCHTU)

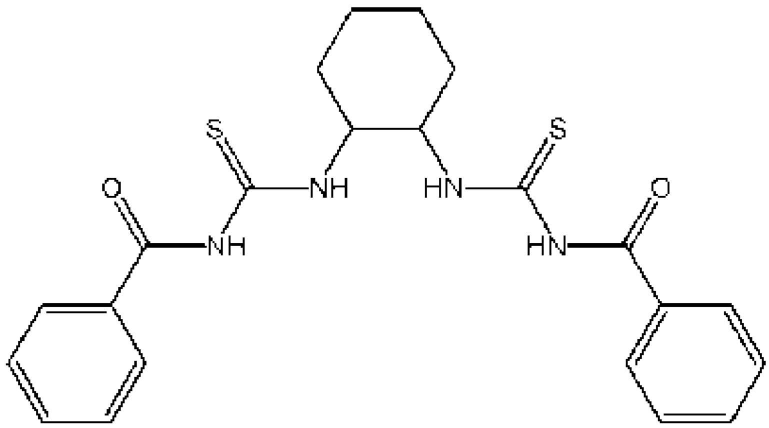

cyclohexyl bis-benzoylthiourée (CH bis-BTU)

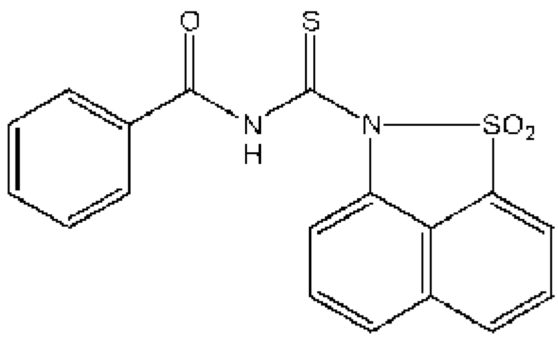

benzoyl naphtosultame thiourée (BNSTU)

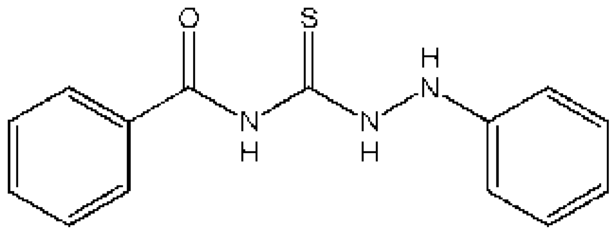

benzoyl phénylhydrazide thiourée (BPHTU)

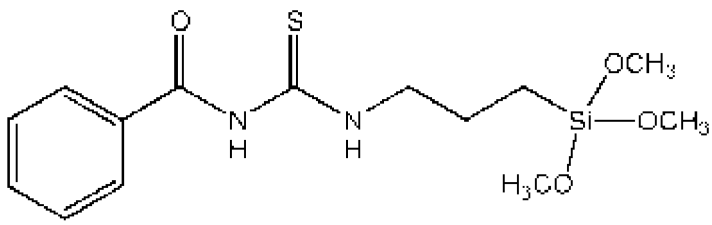

benzoyl thiourée propyl triméthoxysilane (BTU-PTS)

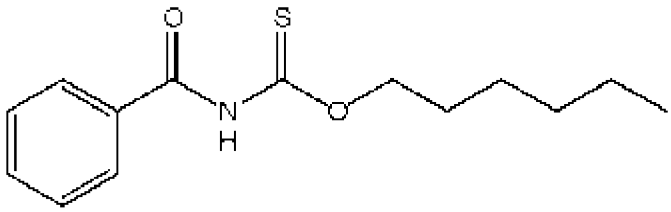

adduit BTU-H

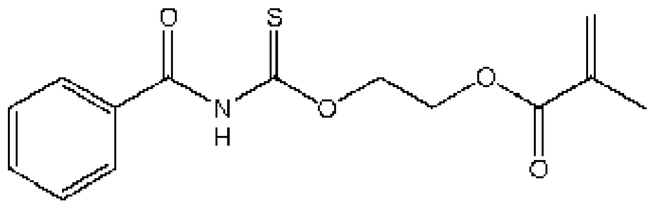

adduit BTU-HEMA

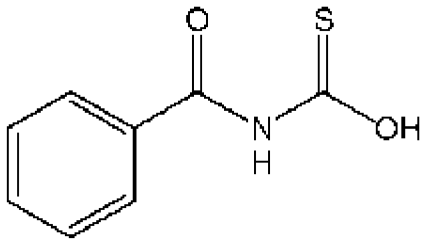

adduit BTU-eau

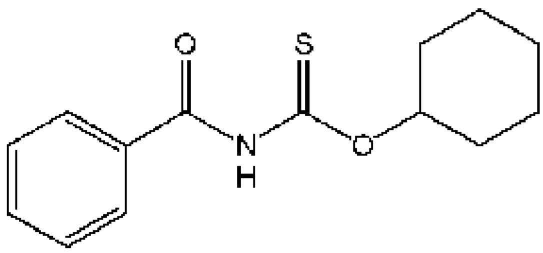

adduit BTU-CH

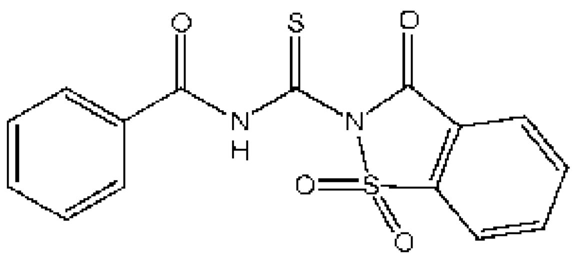

benzoyl saccharine thiourée (BTU-BS)

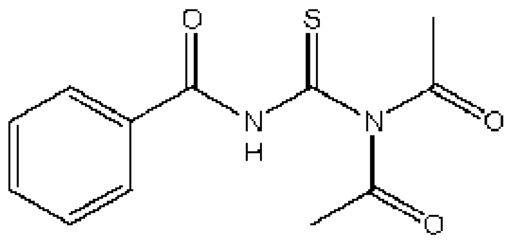

benzoyl diacétamide urée (BDU)

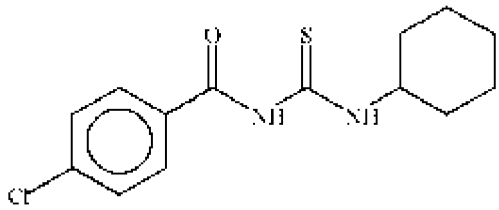

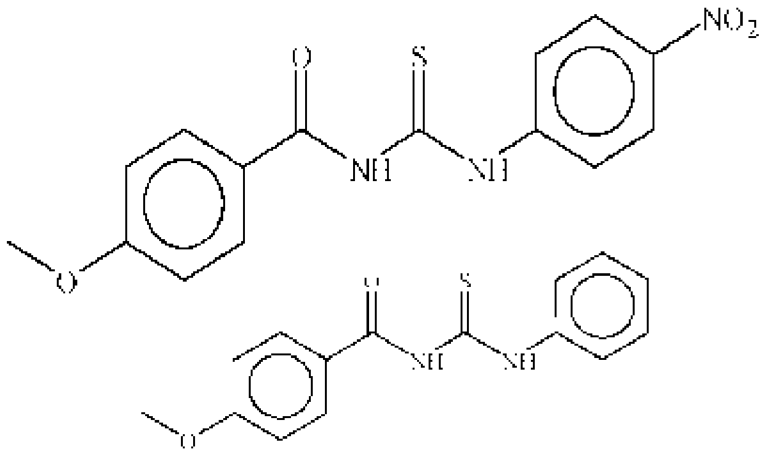

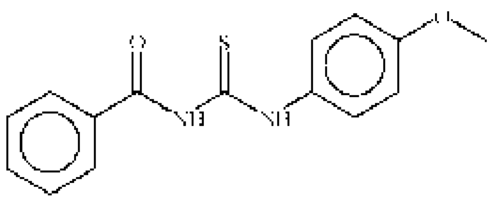

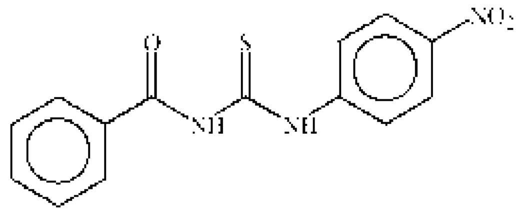

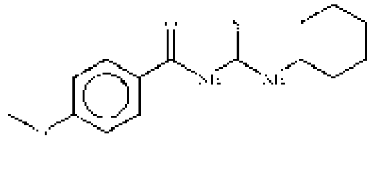

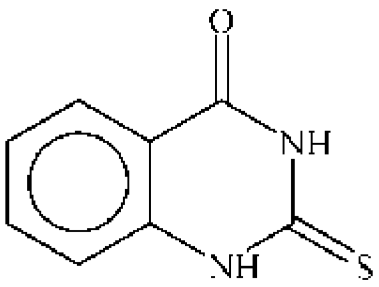

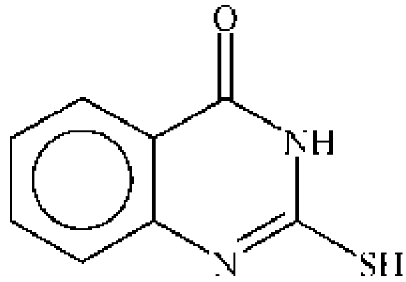

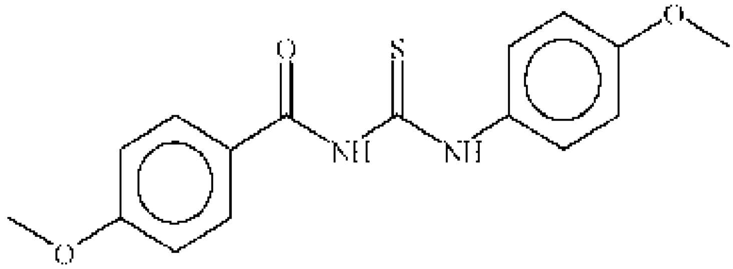

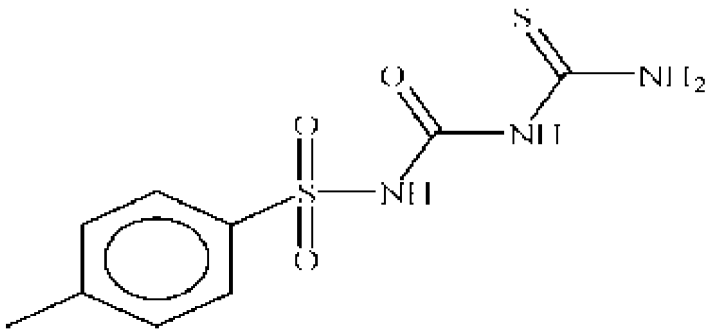

dans laquelle, lorsqu'ils sont mélangés, le catalyseur peroxyde amorce le durcissement du composant durcissable par voie radicalaire et le dérivé de benzoylthiourée ou benzoylthiouréthane amorce le durcissement du composant cyanoacrylate.

**2.** Composition selon la revendication 1, dans laquelle le catalyseur peroxyde est présent en une quantité allant de 0,01 pour cent en poids à 10 pour cent en poids, en poids du composant cyanoacrylate.

**3.** Composition selon la revendication 1, dans laquelle le composant durcissable par voie radicalaire est un composant (méth)acrylate choisi dans le groupe constitué de di(méth)acrylates de polyéthylène glycol, (méth)acrylates et di(méth)acrylates de tétrahydrofurane, (méth)acrylate d'hydroxypropyle, di(méth)acrylate d'hexanediol, tri(méth)acrylate de triméthylolpropane, diméthacrylate de diéthylène glycol, diméthacrylate de triéthylène glycol, benzylméthacrylate, diméthacrylate de tétraéthylène glycol, diméthacrylate de dipropylène glycol, diméthacrylate de di-(pentaméthylène glycol), diacrylate de tétraéthylène diglycol, tétraméthacrylate de diglycérol, diméthacrylate de tétraméthylène, diméthacrylate d'éthylène, diacrylate de néopentylglycol, triacrylate de triméthylolpropane, mono et di(méth)acrylates de bisphénol-A, (méth)acrylate de bisphénol-A éthoxylé, et mono et di(méth)acrylates de bisphénol-F.

**4.** Composition selon la revendication 1, dans laquelle la première partie est logée dans une première chambre d'une seringue à double chambre et la seconde partie est logée dans une seconde chambre de la seringue à double chambre ou
dans laquelle la première partie et la seconde partie sont chacune logées dans une chambre séparée d'un récipient à double chambre.

**5.** Composition selon la revendication 1, dans laquelle la seconde partie comprend en outre au moins l'un parmi un

plastifiant, une charge et un durcisseur, dans laquelle le durcisseur est de préférence un élément choisi dans le groupe constitué de (a) produits de réaction de la combinaison d'éthylène, d'acrylate de méthyle et de monomères ayant des sites de durcissement d'acide carboxylique, (b) dipolymères d'éthylène et d'acrylate de méthyle, (c) combinaisons de (a) et (b), (4) copolymères chlorure de vinylidène-acrylonitrile, (5) et copolymère chlorure de vinyle/acétate de vinyle, (6) copolymères de polyéthylène et d'acétate de polyvinyle, et combinaisons de ceux-ci.

**6.** Composition selon la revendication 1, dans laquelle la première partie et la seconde partie sont présentes dans un rapport 1:1 en volume.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3183217 A, Serniuk
- US 3963772 A, Takeshita
- US 4440910 A, O'Connor
- US 4560723 A, Millet
- US 5340873 A, Mitry
- US 5994464 A, Ohsawa
- US 6833196 B, Wojciak
- US 6562181 B, Righettini
- US 9371470 B, Burns
- JP S56127609 A
- US 8986847 B, Jacobine
- US 9365750 B, Birkett
- US 9371473 B, Birkett
- US 4556700 A
- US 4622414 A
- US 4636539 A
- US 4695615 A
- US 4718966 A
- US 4855461 A
- US 4837260 A, Sato
- US 4906317 A
- US 5312864 A, Wenz
- US 5530037 A
- US 6607632 B
- US 4102945 A, Gleave
- US 4444933 A, Columbus
- US 5382635 A
- US 5506283 A
- US 5693714 A
- US 5969053 A


### Non-patent literature cited in the description


- *CHEMICAL ABSTRACTS*, 9010-81-5
- *CHEMICAL ABSTRACTS*, 70131-67-8
- *CHEMICAL ABSTRACTS*, 25053-48-9
- *CHEMICAL ABSTRACTS*, 72121-94-9
- *CHEMICAL ABSTRACTS*, 69011-33-2
- *CHEMICAL ABSTRACTS*, 69011-31-0
- *CHEMICAL ABSTRACTS*, 69011-32-1
- **A. PRABHAKAR et al.** Structural Investigations of Polypropylene glycol (PPG) and Isophorone diisocyanate (IPDI)-based Polyurethane Prepolymer by 1D and 2D NMR Spectroscopy. *J. Polym. Sc.: Part A: Polym. Chem.*, 2005, vol. 43, 1196-1209